(19) Europäisches Patentamt
European Patent Office
Office européen des brevets

(11) EP 1 693 076 B1

(12) **EUROPEAN PATENT SPECIFICATION**

(45) Date of publication and mention of the grant of the patent:
**27.05.2015 Bulletin 2015/22**

(21) Application number: **04820222.0**

(22) Date of filing: **08.12.2004**

(51) Int Cl.:
***B01D 67/00*** *(2006.01)* ***A61M 1/18*** *(2006.01)*
***B01D 69/02*** *(2006.01)*

(86) International application number:
**PCT/JP2004/018270**

(87) International publication number:
**WO 2005/056081 (23.06.2005 Gazette 2005/25)**

(54) **BUNDLE OF SELECTIVELY PERMEABLE POLYSULFONE-BASED HOLLOW FIBER MEMBRANES AND PROCESS FOR MANUFACTURING THE SAME**

BÜNDEL VON SELEKTIV PERMEABLEN POLYSULFON-BASIERTEN HOHLFASERMEMBRANEN UND HERSTELLUNGSVERFAHREN DAFÜR

FAISCEAU DE MEMBRANES A FIBRES CREUSES SELECTIVEMENT PERMEABLES A BASE DE POLYSULFONE ET PROCEDE DE FABRICATION CORRESPONDANT

(84) Designated Contracting States:
**AT BE BG CH CY CZ DE DK EE ES FI FR GB GR HU IE IS IT LI LT LU MC NL PL PT RO SE SI SK TR**

(30) Priority: **09.12.2003 JP 2003410871**

(43) Date of publication of application:
**23.08.2006 Bulletin 2006/34**

(73) Proprietor: **TOYOBO CO., LTD.**
**Osaka-shi**
**Osaka 530-8230 (JP)**

(72) Inventors:
- **MABUCHI, Kimihiro;**
  **c/o Toyo Boseki K.K. Res. Inst.**
  **Otsu-shi, Shiga 5200243 (JP)**
- **TAMAMURA, Noriyuki**
  **c/o Toyo Boseki K.K.**
  **Osaka 5308230 (JP)**
- **SAKURAI, Hidehiko;**
  **c/o Toyo Boseki K.K. Res. Inst.**
  **Otusu-shi, Shiga 5200243 (JP)**
- **KATO, Noriaki;**
  **c/o Toyo Boseki K.K. Res. Inst.**
  **Otsu-shi 5200243 (JP)**
- **SHIBANO, Hiroshi;**
  **c/o Toyo Boseki K.K.**
  **Osaka-shi 5308230 (JP)**
- **NOSE, Katsuhiko;**
  **c/o Toyo Boseki K.K.**
  **Osaka-shi, Osaka 5308230 (JP)**

(74) Representative: **Vossius & Partner**
**Patentanwälte Rechtsanwälte mbB**
**Siebertstrasse 3**
**81675 München (DE)**

(56) References cited:
**EP-A- 0 997 182** **JP-A- 9 070 431**
**JP-A- 2001 259 380** **JP-A- 2003 175 320**
**JP-A- 2003 245 529** **JP-A- 2003 284 931**

Remarks:
The file contains technical information submitted after the application was filed and not included in this specification

EP 1 693 076 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The present invention relates to selectively permeable polysulfone-based hollow fiber membranes which have high safety and high stability in performance and which is excellent in module-fabricating workability and thus is particularly suitable for use in a blood purifier, and a process for manufacturing the same.

BACKGROUND OF THE INVENTION

In the hemocathartic therapies for renal failures, etc., modules such as hemodialyzers, blood filters, hemodialytic filters, etc. are widely used to remove urine toxic substances and waste products from blood. Modules such as hemodialyzers, blood filters, hemodialytic filters, etc. are manufactured using, as separators, dialytic membranes or ultrafiltration membranes which are manufactured using natural materials such as cellulose or derivatives thereof (e.g., cellulose diacetate, cellulose triacetate, etc.) and synthesized polymers such as polysulfone, polymethyl methacrylate, polyacrylonitrile, etc. Particularly, modules using hollow fiber membranes as separators are highly important in the field of hemodialyzers because of their advantages such as the reduction of in vitro circulation blood amounts, high efficiency of removing intrabloodsubstances, high module-fabricating productivity, etc.

Among the above membrane materials, polysulfone-based resins having high water permeability have attracted keen interests as the most suitable materials for the advance of dialytic technologies. However, semipermeable membranes formed of polysulfone-based resins alone are poor in affinity with blood and tend to cause air lock phenomena, since the polysulfone-based resins are hydrophobic. Therefore, such semipermeable membranes as they are can not be used to treat blood.

To solve the problem, there are proposed methods of imparting hydrophilicity to such membranes, by adding hydrophilic polymers to polysulfone-based resins: for example, there are disclosed methods of blending polyhydric alcohols such as polyethylene glycol, etc. to polysulfone-based resins and manufacturing membranes by using such materials (cf. Patent Literatures 1 and 2).
Patent Literature 1: JP-A-61-232860 (1986)
Patent Literature 2: JP-A-58-114702 (1983)

Other methods are disclosed in which poly(vinylpyrrolidone)s are added to polysulfone-based resins (cf. Patent Literatures 3 and 4).
Patent Literature 3: JP-B-5-54373 (1993)
Patent Literature 4: JP-B-6-75667 (1994)

The above problem relating to the affinity with blood can be solved by these methods. However, a new problem arises in that the hydrophilic polymers elute from the membranes. The hydrophilic polymers are foreign materials to the organisms, and are accumulated in vivo over a long term of hemodialytic treatments, if the eluting amounts of the hydrophilic polymers are large. Such accumulation of hydrophilic polymers often leads to the development of side effects or complications. Therefore, there is a demand for establishment of techniques for reducing the eluting amounts of hydrophilic polymers.

As the methods of evaluating the eluting amounts of hydrophilic polymers, there are known a method of extracting a hydrophilic polymer by using a 40% aqueous ethanol solution whose extracting power is known to be close to the extracting power of blood plasma (the ethanol extraction evaluation method), a testing method which employs an extraction method using pure water and which is regulated in the approval manufacturing standards for dialytic artificial kidney devices, and a forced extraction method which is a pure water extraction method but which extracts a hydrophilic polymer by dissolving a hollow fiber membrane in a solvent.

For example, as the methods of reducing the eluting amounts of hydrophilic polymers based on the ethanol extraction evaluation method, a hydrophilic polymer having a high molecular weight and also having a sharpened molecular weight distribution is used, or otherwise poly(vinylpyrrolidone) as a hydrophilic polymer is partially crosslinked (cf. Patent Literatures 5 and 6).
Patent Literature 5: JP-A-2000-300663 (2000)
Patent Literature 6: JP-A-11-309355 (1999)

As the method of reducing the eluting amount of a hydrophilic polymer based on the test evaluation method regulated in the approval manufacturing standards for dialytic artificial kidney devices, there is disclosed a method of washing membranes with an aqueous alcohol solution (cf. Patent Literature 7).
Patent Literature 7: JP-A-10-244000 (1998)

As the method of reducing the eluting amounts of hydrophilic polymers based on the forced extraction evaluation method, methods of crosslinking hydrophilic polymers are disclosed (cf. Patent Literatures 8 and 9).
Patent Literature 8: JP-A-10-230148 (1998)

Patent Literature 9: JP-A-2001-170171 (2001)

According to the above-described hydrophilicity-imparting techniques using hydrophilic polymers, the hydrophilic polymers are present on not only the inner surfaces of the membranes to be in contact with blood but also on the outer surfaces thereof, and therefore, the outer surfaces of the membranes also become hydrophilic. As a result, endotoxins contained in dialyzing fluids may more possibly be infiltrated into the blood contact sides of the membranes, which leads to side effects such as fever, etc.; or there arises such a disadvantage that the module-fabricating workability becomes poor, since the hollow fiber membranes stick to one another because of the hydrophilic polymer on the outer surfaces thereof while the membranes are being dried.

Out of the above problems, the problem of the infiltration of endotoxins into the blood contact sides of the membranes is solved by a method which makes use of the properties of endotoxins that they are easily adsorbed onto hydrophobic materials since endotoxins have hydrophobic moieties in their molecules (cf. Patent Literature 10).

Patent Literature 10: JP-A-2000-254222 (2000)

This Patent Literature discloses a method of decreasing the ratio of the hydrophilic polymer to the hydrophobic polymer on the outer surfaces of hollow fiber membranes, to 5 - 25%. Certainly, this method is preferable to inhibit the infiltration of endotoxins into the blood contact sides of the membranes. However, it is needed to remove the hydrophilic polymer on the outer surfaces of the membranes by washing, in order to impart this inhibiting property to the membranes. This washing requires an appreciably long treating time, resulting in poor cost-effectiveness. For instance, in the Examples of the same Patent Literature, the membranes are showered and washed with water of 60°C for one hour and then washed with hot water of 110°C for one hour.

Decreasing the amount of the hydrophilic polymer on the outer surfaces of the membranes is preferable, since the infiltration of endotoxins into the blood contact side of the membranes can be inhibited. However, the hydrophilicity of the outer surfaces of the membranes becomes lower, which leads to the following problem. When a bundle of such hollow fiber membranes dried for fabricating a module are wetted with a physiological salt solution, the membranes are lower in compatibility with the physiological salt solution, and thus are lower in priming capacity, i.e., an air-purging capacity for wetting the membranes. To solve this problem, a method of adding a hydrophilic compound such as glycerin is disclosed (cf., Patent Literatures 11 and 12).

Patent Literature 11: JP-A-2001-190934 (2001)

Patent Literature 12: Japanese Patent No. 3193262

However, this method has a problem in that the hydrophilic compound behaves as a foreign material during dialysis, and is also easily subject to photo-deterioration, which gives an adverse influence on the storage stability of a module of such membranes. There is another problem in that, in fabricating a module, a bundle of the hollow fiber membranes is hardly fixed to the module with an adhesive due to the presence of the hydrophilic compound.

To avoid the sticking of the hollow fiber membranes to one another while a bundle of such membranes are being dried, as mentioned above, there is disclosed a method of increasing the porosity of the outer surface of a membrane to 25% or higher (cf., Patent Literature 13).

This method is certainly preferable to avoid the sticking of the membranes, while such high porosity lowers the strength of the membranes, which may lead to blood leakage or the like.

Patent Literature 13: JP-A-2001-38170 (2001)

There is disclosed a further method of specifying the porosity and the pore area of the outer surface of a membrane (cf., Patent Literature 14). However, a membrane obtained by this method is lower in water permeability.

Patent Literature 14: JP-A-2000-140589 (2000)

The present inventors have made lots of efforts in order to solve the above problems, and have found out that the above discussed problems, namely, reduction of the eluting amount of a hydrophilic polymer, inhibition of infiltration of endotoxins into the blood contact sides of the membranes, inhibition of a decrease in the priming capacity of the membranes during the fabrication of a module, and inhibition of the sticking of the membranes while a bundle of the hollow fiber membranes is being dried can be greatly improved by optimizing the ratio of the hydrophilic polymer on the outer surfaces of the hollow fiber membranes, and the porosity of the outer surfaces of the membranes. Based on this finding, the present inventors already filed the application for patent with the Patent Office (cf., Patent Literature 15).

Patent Literature 15: Japanese Patent No. 3551971

When a bundle of hollow fiber membranes is dried by irradiation with microwaves, it is proposed to lower the output of microwaves at a point of time when the average moisture content of the bundle of hollow fiber membranes has reached 20 to 70 mass % (Patent Literatures 16, 17 and 18). These literatures disclose that the bundles of membranes are dried by irradiation firstly with microwaves having outputs of 30 kW, followed by microwaves having relatively high outputs of about 21 kW. However, any of the Literatures does not disclose a method of drying a bundle hollow fiber membranes by irradiation with microwaves under a reduced pressure. These Literatures disclose that bundles of hollow fiber membranes are dried by usual drying steps and irradiation with microwaves (cf., Patent Literatures 17 and 18), but do not disclose a method of drying a bundle of membranes by employing the irradiation with microwaves in combination with a reduced pressure atmosphere.

Patent Literature 16: JP-A-2003-175320 (2003)
Patent Literature 17: JP-A-2003-175321 (2003)
Patent Literature 18: JP-A-2003-175322 (2003)

However, the sticking of the hollow fiber membranes can not be sufficiently avoided by this method alone, and the partial sticking thereof in the lengthwise direction of the bundle can not be perfectly avoided. Therefore, the workability for fabricating a module therefrom often becomes lower.

Patent Literature 19 discloses a method of drying a large amount of bundles of hollow fiber membranes wet with a washing liquid in a short time: that is, a heated dry gas is supplied from one end of the bundle of hollow fiber membranes, and thus is forcedly allowed to pass through the interior sides of the hollow fiber membranes to thereby dry the same. Although this method is possible to dry the bundle of hollow fiber membranes in a short time, the material for the hollow fiber membranes around the dry gas entrance may deteriorate due to heat, since the heated dry gas is allowed to pass through the hollow fiber membranes from only one end of the bundle of hollow fiber membranes; and the moisture content of the bundle of hollow fiber membranes in the lengthwise direction can not be kept uniform, since there is a difference in drying rate between in the vicinity of the dry gas entrance and in the vicinity of the dry gas exit.
Patent Literature 19: JP-A-6-10208 (1994)

EP 0 997 182 (A1) describes a polysulfone type hollow fiber membrane for purifying blood, wherein in the membrane a selective separation layer exists on the internal surface side of the hollow fiber membrane and wherein the membrane contains a polyvinyl pyrrolidone, wherein the polyvinyl pyrrolidone is contained in a proportion of 1 to 10 % by weight, 5 to 50 % of said polyvinyl pyrrolidone is soluble in water, and the concentration of the polyvinyl pyrrolidone on the internal surface of the hollow fiber membrane is in the range of 30 % to 45 %.

JP 2003 175320 (A) describes a method for manufacturing a dry hollow fiber membrane reduced in the amount of an eluted substance, wherein a wet membrane comprising a polysulfone polymer and polyvinylpyrrolidone and containing no membrane pore holding material high in water penetration quantity and having a large pore size is preliminarily manufactured and dried after desolvation to contract the pore size of the wet membrane and a part of polyvinylpyrrolidone in the membrane is further made insoluble in water. In this manufacturing method, the wet membrane drying process is performed by irradiation with microwaves.

JP 2003 245529 (A) descibes a method for manufacturing a hollow fiber membrane, wherein the angle of radiation of microwaves emitted from a wave guide pipe is set to 30-120° and the distance from the wave guide pipe to the wet membranes is 50-500 mm in drying a plurality of the fiber bundles and in irradiating the wet membranes bundled into the fiber bundle state with microwaves.

JP 2001 259380 (A) describes a method for drying the hollow fiber bundle, wherein a cylindrical body, which houses the hollow yarn bundle and has an opening part at least at one end thereof and has a venting hole separately from the opening part, is provided and an air pipe is connected to the venting hole to supply air to the opening part and venting hole of the cylindrical body.

JP 2003 284931 (A) describes an apparatus for drying a hollow fiber membrane, characterized by comprising in a vessel a means of micro-wave irradiation, a means to carry the bundles fixed thereon into or out of the vessel, and a means to pass a liquid having a dielectric loss coefficient of 1 to 50 therethrough.

## DISCLOSURE OF THE INVENTION

### PROBLEMS TO BE SOLVED BY THE INVENTION

As a result of the present inventors' intensive investigation to elucidate the causes of these problems, it is found that the content (or the ratio) of a hydrophilic polymer on the outer surfaces of hollow fiber membranes varies in the lengthwise direction of the bundle of hollow fiber membranes, and that partial sticking of the membranes occurs in a portion of the membranes at which the content of the hydrophilic polymer is high.

The present invention is intended to provide selectively permeable polysulfone-based hollow fiber membranes which have high safety and high stability in performance and which are excellent in module-fabricating workability and which are particularly suitable for use in a blood purifier, and a process for manufacturing the same.

### MEANS FOR SOLVING PROBLEMS

The present invention relates to a bundle of a plurality of selectively permeable polysulfone-based hollow fiber membranes wherein the amount of poly(vinyl pyrrolidone) (PVP) eluting from each hollow fiber membrane is not larger than 10 ppm, and wherein the content of the PVP in the outer surface of the hollow fiber membrane is 25 to 50 mass %, characterized in that any of extracted solutions from ten fractions of said bundle, obtained by dividing said bundle at substantially regular intervals along the lengthwise direction, shows a maximum value of smaller than 0.10 in UV absorbance at a wavelength of 220 to 350 nm, with the proviso that said extracted solutions are obtained by the extraction

method for tests regulated in the approval manufacturing standards for dialytic artificial kidney devices; and in that the difference between the maximum and the minimum out of the maximum values of UV absorbance of the extracted solutions from the respective fractions is not larger than 0.05, according to claim 1.

The present invention also relates to a process for manufacturing a bundle of selectively permeable polysulfone-based hollow fiber membranes according to claim 6, which is characterized in that the direction of feeding an air for drying the bundle of hollow fiber membranes is inverted alternately at certain time intervals.

EFFECT OF THE INVENTION

The polysulfone-based hollow fiber membranes of the present invention have high safety and high stability in performance, and are excellent in module-fabricating workability and are suitable as hollow fiber membranes for use in blood purification, which are required to have high water permeability so as to be used for treatments of chronic renal failures.

Further, such hollow fiber membranes can be economically and reliably manufactured by the manufacturing process of the present invention.

BEST MODES FOR CARRYING OUT THE INVENTION

Hereinafter, the present invention will be described in more detail.

The hollow fiber membranes to be used in the present invention are formed of a polysulfone-based resin containing a hydrophilic polymer. The term "polysulfone-based resin" referred to in the present invention is a collective name of resins having sulfone bonds, and there is no particular limit in selection thereof. For example, polysulfone resins and polyethersulfone resins which have by combined drying steps, comprising a step of repeating units of the following formulae are widely used as the polysulfone-based resins and are commercially available with ease:

[Chemical formula 1]

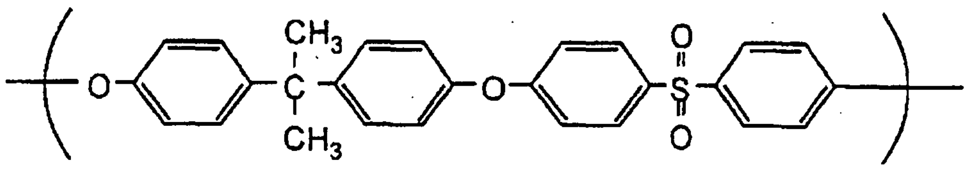

[Chemical formula 2]

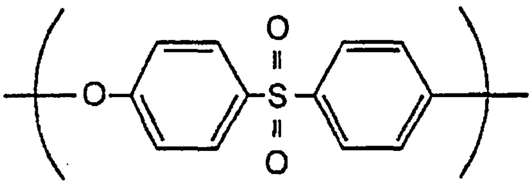

The hydrophilic polymer to be used is such one that forms a micro phase-separating structure together with the polysulfone-based resin in a solution. Examples of such a hydrophilic polymer described herein include polyethylene glycol, poly(vinyl alcohol), carboxylmethyl cellulose, poly(vinylpyrrolidone), etc.. In the present invention poly (vinylpyrrolidone) is used because of its safety and economical effect. Poly(vinylpyrrolidone) (PVP) is a water soluble polymeric compound which is obtained by vinyl polymerization of N-vinylpyrrolidone and which is commercially available under the trade name of "KOLLIDON®" from BASF, "Plasdone®" from ISP, or "PITZCOL®" from DAI-ICHI KOGYO SEIYAKU CO., LTD., each having a different molecular weight. It is preferable to use poly(vinylpyrrolidone) having a low molecular weight so as to impart hydrophilicity to membranes, while it is preferable to use poly(vinylpyrrolidone) having a high molecular weight so as to decrease the eluting amount thereof. However, preferably, poly(vinylpyrrolidone) is appropriately selected in accordance with the required properties of a bundle of hollow fiber membranes as a final product. That is, the same kinds of poly(vinylpyrrolidone) having the same molecular weights may be used, or otherwise, two or more kinds of poly(vinylpyrrolidone) having different molecular weights may be used as a mixture. Further, a commercially available product may be purified for use as poly(vinylpyrrolidone) which has a sharpened molecular weight distribution.

The ratio of a hydrophilic polymer to a hydrophobic polymer in a hollow fiber membrane according to the present invention is determined so that sufficient hydrophilicity and high moisture content can be imparted to the hollow fiber

membrane. The mass ratio of the hydrophilic polymer to the hydrophobic polymer is 1 to 20 mass %. The mass ratio of the hydrophilic polymer is preferably not smaller than 1.5 mass %, more preferably not smaller than 2 mass %, still more preferably not smaller than 2.5 mass %, so as to provide a sufficient hydrophilicity-imparting effect to the membrane. On the other hand, when the mass ratio of the hydrophilic polymer is too large, the hydrophilicity-imparting effect is saturated, and the eluting amount of the hydrophilic polymer from the membrane increases and sometimes exceeds 10 ppm as will be described later. Therefore, the mass ratio of the hydrophilic polymer is more preferably not larger than 18 mass %, still more preferably not larger than 14 mass %, far still more preferably not larger than 10 mass %, and particularly not larger than 8 mass %.

In the present invention, the eluting amount of the hydrophilic polymer (PVP) from the hollow fiber membrane is not larger than 10 ppm, as described above. When the eluting amount exceeds 10 ppm, there is a danger of inducing side effects or complications in patients, because the eluting hydrophilic polymer is accumulated over a long term of dialysis treatments. A method for satisfying these properties may be optionally selected: for example, these properties can be satisfied by selecting the ratio of the hydrophilic polymer to the hydrophobic polymer within the above range, or optimizing the conditions for manufacturing the hollow fiber membranes. The eluting amount of the hydrophilic polymer is more preferably not larger than 8 ppm, still more preferably not larger than 6 ppm, far still more preferably not larger than 4 ppm.

In a more preferred embodiment, the hydrophilic polymer is crosslinked so as to be insoluble. The crosslinking method or the degree of crosslinking is not particularly limited and may be optionally selected. For example, the crosslinking may be carried out by using $\gamma$-rays, electron rays or heat, or otherwise, chemical crosslinking may be carried out. Above all, the crosslinking using $\gamma$-rays or electron rays is preferable, because no residue of an initiator or the like is left to remain, and because the penetration depth thereof into the material is large.

The term "insoluble" referred to in the present invention means the solubility of the membrane in dimethylformamide found after the crosslinking: that is, 1.0 g of the membrane is weighed after the crosslinking, and then is dissolved in 100 ml of dimethylformamide, so as to visually observe the presence or absence of an insoluble matter for evaluation.

In case of a module filled with a liquid, the liquid is firstly drawn out of the module; then, pure water is allowed to pass through the passage on the side of the dialysing fluid, at a rate of 500 mL/minute for 5 minutes; then, pure water is likewise allowed to pass through the passage on the side of the blood, at a rate of 200 mL/minute for 5 minutes; and finally, pure water is allowed to pass from the passage on the side of the blood to the passage on the side of the dialysing fluid at a rate of 200 mL/minute, so as not to permeate the hollow fiber membranes. Thus, the washing treatment of the hollow fiber membranes is completed. The hollow fiber membranes are removed from the module and are freeze-dried, and the freeze-dried membranes are used as a sample for measuring an insoluble component. Also, in the case of a module of dried hollow fiber membranes, the same washing treatment is carried out to obtain a sample for measurement.

In the present invention, the content of the hydrophilic polymer (PVP) on the outer surface of the hollow fiber membrane is 25 to 50 mass %. When the content of the hydrophilic polymer of the outer surface of the membrane is less than 25 mass %, the content of the hydrophilic polymer in a whole of the membrane, particularly on the inner surface of the membrane, becomes too low, so that the compatibility of the membrane with the blood or the permeability thereof tends to lower. In case of the dried membrane, the priming capacity may become insufficient.

When a hemodialyzer is used for the therapy of blood purification, it is needed to wet and degas the hollow fiber membranes by allowing a physiological salt solution or the like to pass through the interiors and exteriors of the hollow fiber membranes of the hemodialyzer. It is considered that, in this priming operation, the circularity of the hollow fiber membranes, the crushing of the end portions of the membranes, the deformation of the membranes, the hydrophilicity of the material for the membranes, etc. may give some influences on the priming capacity of the membranes. Particularly, in the case of a module of dried hollow fiber membranes comprising a hydrophobic polymer and a hydrophilic polymer, hydrophile-lipophile balance in the hollow fiber membrane gives a significant influence on the priming capacity of the membrane. Therefore, the content of the hydrophilic polymer on the outer surface of the membrane is more preferably not smaller than 27 mass %, still more preferably not smaller than 29 mass %, far still more preferably not smaller than 31 mass %.

When the content of the hydrophilic polymer on the outer surface of the membrane exceeds 50 mass %, endotoxins in the dialysing fluid may more and more possibly infiltrate into the blood contact side of the membrane, which may induce side effects such as fevers, etc. Further, the hollow fiber membranes stick to one another due to the hydrophilic polymer present on the outer surfaces of the membranes while the membranes are being dried, and consequently, the module-fabricating workability may become poor. Therefore, the content of the hydrophilic polymer in the outer surface of the membrane is more preferably not larger than 47 mass %, still more preferably not larger than 43 mass %, far still more preferably not larger than 41 mass %.

To control the content of the hydrophilic polymer on the outer surface of the hollow fiber membrane within the above specified range, for example, the ratio of the hydrophilic polymer to the hydrophobic polymer is controlled within the above specified range; or the hollow fiber membrane-manufacturing conditions are optimized. It is also an effective method to wash the hollow fiber membranes. The optimization of the hollow fiber membrane manufacturing conditions

such as the humidity control of the air gap section at the exits of nozzles, drawing condition, the temperature of a coagulation bath, the composition ratio of a solvent to a non-solvent in a coagulating liquid, etc. is also effective. As the washing method, washing with hot water, washing with alcohol and centrifugal washing are effective. Among these methods, the optimal control of the humidity of the air gap section and the composition ratio of the solvent to the non-solvent in the coagulating liquid is particularly effective as the membrane-manufacturing conditions, and the washing with alcohol is particularly effective as the washing method.

It is preferable to enclose the air gap section with a material which can shield it from an external atmosphere. It is also preferable to control the humidity of the interior of the air gap section by adjusting the composition of a spinning dope, the temperature of the nozzles, the length of the air gap section, and the temperature and the composition of an external coagulating bath. For example, a spinning dope (polyethersulfone/poly(vinylpyrrolidone)/dimethyl acetamide/Ro water = 10 to 25/0.5 to 12.5/52.5 to 89.5/0 to 10.0) is injected from nozzles maintained at a temperature of 30 to 60°C, and the resulting strand is allowed to pass through an air gap with a length of 100 to 1,000 mm and led to an external coagulating bath having a concentration of 0 to 70 wt. % and maintained at a temperature of 50 to 80°C. In this case, the absolute humidity of the air gap is 0.01 to 0.3 kg/kg of a dry air. By adjusting the humidity of the air gap within this range, the porosity, the average pore area and the hydrophilic polymer content of the outer surface of the membrane can be controlled within proper ranges, respectively.

As an internal coagulating liquid, it is preferable to use an aqueous solution containing dimethyl acetamide (DMAc) in an amount of 0 to 80 mass %, preferably 15 to 70 mass %, more preferably 25 to 60 mass %, still more preferably 30 to 50 mass %. When the concentration of the internal coagulating liquid is too low, the dense layer of the blood contact surface of the membrane becomes thicker, which may lead to a lower solute permeability. When the concentration of the internal coagulating liquid is too high, it is likely to form an incomplete dense layer, which may lead to lower fractionation properties.

It is preferable to use an aqueous solution containing 0 to 50 mass % of DMAc as an external coagulating liquid. When the concentration of the external coagulating liquid is too high, the porosity and the average pore area of the outer surface of the membrane becomes too large, and consequently, the amount of endotoxins which reversely flow into the blood contact side of the membrane during a hemodialysis tends to increase, and the burst pressure tends to lower. Therefore, the concentration of the external coagulating liquid is more preferably not higher than 40 mass %, still more preferably not higher than 30 mass %, far still more preferably not higher than 25 mass %. When the concentration of the external coagulating liquid is too low, it is needed to use a large amount of water so as to dilute the solvent drawn into the external coagulating liquid from the spinning dope, and thus, the cost for treating the waste liquid becomes higher. Therefore, the concentration of the external coagulating liquid is more preferably not lower than 5 mass %.

In the manufacturing of the hollow fiber membranes according to the present invention, preferably, the hollow fiber membranes are substantially not drawn before the structures of the membranes are perfectly fixed. The wording of "substantially not drawn" means that the roller speed during the spinning step is controlled so as not to cause looseness or excessive tension in the strand of the spinning dope injected from the nozzles. Preferably, the ratio of the linear injection speed to the speed of the first roller in the coagulating bath (a draft ratio) is 0.7 to 1.8. When this ratio is less than 0.7, the hollow fiber membranes being fed tend to loose, which likely leads to lower productivity. Therefore, the draft ratio is more preferably not smaller than 0.8, still more preferably not smaller than 0.9, far still more preferably not smaller than 0.95. When the draft ratio exceeds 1.8, the dense layers of the membranes may tear to break the structures of the membranes. Therefore, the draft ratio is more preferably not larger than 1.7, still more preferably not larger than 1.6, far still more preferably not larger than 1.5, particularly not larger than 1.4. By adjusting the draft ratio within the above specified range, the deformation or breakage of the pores of the membranes can be prevented, and the clogging of the pores of the membranes due to proteins in the blood can be prevented, so that the stability of the performance of the membranes and the sharp fractionation properties of the membranes can be realized.

The hollow fiber membranes having passed through the washing bath, in wet states, are directly wound onto a hank to make a bundle of 3,000 to 20,000 hollow fiber membranes. Then, the bundle of hollow fiber membranes is washed to remove an excess of the solvent and the hydrophilic polymer. In the present invention, in order to wash the bundle of hollow fiber membranes, preferably, the bundle is immersed in hot water of 70 to 130°C or an aqueous solution of 10 to 40 vol % of ethanol or isopropanol of a room temperature to 50°C for the treatment thereof.

(1) In case of washing with hot water, the bundle of hollow fiber membranes is immersed in an excess of RO water at a temperature of 70 to 90°C for 15 to 60 minutes, and then is removed therefrom, followed by centrifugal hydroextraction. This operation is repeated 3 or 4 times while the RO water being replaced with fresh one. Thus, the bundle of hollow fiber membranes is washed.

(2) Another method of washing the bundle of hollow fiber membranes may be employed, in which the bundle of the membranes is immersed in an excess of RO water in a compressed container at 121°C for about 2 hours for the treatment of the same.

(3) In case of washing with ethanol or isopropanol, preferably, the same operation as in the method (1) is repeated.

(4) Also preferable is a washing method comprising the steps of radially setting the bundle of hollow fiber membranes in a centrifugal washing container, and spraying a washing liquid of 40 to 90°C to the bundle of membranes shower-like from the center of rotation, so as to carry out centrifugal washing for 30 minutes to 5 hours.

In this regard, two or more of the above washing methods may be employed in combination. When the treating temperature is too low in any of the methods, it may be needed to increase the washing operations in number, which leads to higher cost. When the treating temperature is too high, the decomposition of the hydrophilic polymer tends to accelerate, and the washing efficiency, on the contrary, tends to lower. The above washing makes it possible to optimize the content of the hydrophilic polymer in the outer surfaces of the membranes, and to inhibit the sticking of the membranes or to decrease the amounts of the eluting substances.

As for the content of the hydrophilic polymer in the outer surfaces of the membranes, the surface concentration of the hydrophilic polymer is measured and calculated based on the electron spectroscopy for chemical analysis (ESCA) as described later, and an absolute value of the content of the hydrophilic polymer in the uppermost surface portion (present at a depth of several to several tens angstroms from the surface layer) of the hollow fiber membrane is determined. Generally, the ESCA makes it possible to measure the content of the hydrophilic polymer in a layer of the blood contact surface (the uppermost layer) of the membrane, present at a depth of up to about 10 nm (100 angstroms). It becomes possible to determine the content of the hydrophilic polymer according to the present invention, by measuring a layer at such a depth as an object.

To satisfy the approval manufacturing standards for dialytic artificial kidney devices, it is essential that the maximum value of the UV absorbance of an extracted liquid from the membrane at a wavelength of 220 to 350 nm should be smaller than 0.10. The bundle of hollow fiber membranes of the present invention is divided at regular intervals along the lengthwise direction to obtain ten fractions from the same bundle. It is important that the liquid, extracted from each of the ten fractions by the extraction method for tests regulated in the approval manufacturing standards for dialytic artificial kidney devices, shows a maximum value of smaller than 0.10 in UV absorbance measured at a wavelength of 220 to 350 nm, and it is also important that the difference between the maximum and the minimum out of the maximum values of the liquids extracted from the respective fractions is not larger than 0.05.

In this regard, an elution test according to the approval manufacturing standards for dialytic artificial kidney devices is carried out as follows. Some hollow fiber membranes are arbitrarily selected and removed from the bundle of hollow fiber membranes, and one gram of these hollow fiber membranes in a dried state is weighed and removed. To one gram of the hollow fiber membranes, RO water (100 ml) was added, and then, extraction is made at 70°C for one hour. After that, the UV absorbance of the extracted liquid at a wavelength of 220 to 350 nm is measured.

Further, in the present invention, it is important that the difference between the maximum and the minimum out of the maximum values of UV absorbance (at a wavelength of 220 to 350 nm) of the above-described extracted liquids is not larger than 0.05. By doing so, variation in the contents of poly(vinylpyrrolidone) in the outer surfaces of the hollow fiber membranes along the lengthwise direction of the bundle of hollow fiber membranes, which would give adverse influence on the sticking of the membranes, can be inhibited. Thus, the partial sticking of the hollow fiber membranes, caused in the lengthwise direction of the bundle, can be avoided. Therefore, the difference between the maximum and the minimum out of the maximum values of the UV absorbance of the extracted liquids from the respective fractions is more preferably not larger than 0.04, still more preferably not larger than 0.03, far still more preferably not larger than 0.02.

By controlling the UV absorbance of the extracted liquids from the hollow fiber membranes within the above specified range, it is found that the problem of the partial sticking of the hollow fiber membranes, which would be caused in the lengthwise direction of the bundle and which has never been solved so far as described above, can be solved. The present invention is accomplished based on such a finding. Preferably, this effect leads to the reduction of the variation of the amount of the hydrophilic polymer, etc. eluting from the bundle of hollow fiber membranes. Preferably, the lower limit of the maximum value of the UV absorbance is zero in the following senses: that is, the content of the hydrophilic polymer in the outer surface of each of the membranes, which would give adverse influence on the sticking thereof, is small, and there is no eluting material extracted from the membranes. However, in the present invention, the maximum value of the UV absorbance is preferably from 0.03 inclusive to smaller than 0.1. When this maximum value is smaller than 0.03, the content of the hydrophilic polymer in the inner surface of the membrane is insufficient, and therefore, the membrane is poor in wettability, and the performance of the membrane may not be sufficiently exhibited. Thus, the maximum value of the UV absorbance is more preferably from 0.04 to 0.09, still more preferably from 0.05 to 0.08, most preferably from 0.06 to 0.07.

To control the UV absorbance (at a wavelength of 220 to 350 nm) within the above specified range, the conditions for drying the bundle of hollow fiber membranes are important, and specifically, such conditions are achieved by evenly drying the bundle of hollow fiber membranes in the lengthwise direction. Firstly, the present inventors dried a bundle of hollow fiber membranes by feeding an air to the hollow fiber membranes from one direction along the lengthwise direction of the bundle, as disclosed in, for example, JP-A-6-10208 (1994). However, this method has a problem in that the maximum value of the absorbance of the bundle of hollow fiber membranes at the air outlet portion is relatively low,

while the maximum value of the absorbance of some bundles of hollow fiber membranes at the air inlet portion exceeds 0.10. Although why such a phenomenon occurs is not well known, this is inferred as follows: when the bundle of hollow fiber membranes is dried by feeding an air to the hollow fiber membranes from a given direction, the drying of the bundle of membranes sequentially proceeds from the air inlet portion to the air outlet portion, so that the drying of the bundle of membranes is quickly completed at the air inlet portion, and so that the drying of the same is delayed at the air outlet portion. That is, it is inferred that the difference in drying speed induces a difference in mobility of poly(vinylpyrrolidone) in the outer surface of the bundle of hollow fiber membranes, so that the content of the polymer and the degree of sticking of the membranes become variable. It is also inferred that the uneven drying of the interior of the bundle of hollow fiber membranes deteriorates the hydrophilic polymer, and that a difference in the degree of such deterioration of the polymer may vary the amount of the polymer eluting from the membranes.

To solve the problems, the present inventors have made lots of efforts in order to evenly dry a bundle of hollow fiber membranes while maintaining constant the drying rate of the same, and they have made trials to dry a bundle of hollow fiber membranes while inverting the air-feeding direction 180 degrees at every given time intervals (for example at every time intervals of one hour or 30 minutes). As a result, the bundle of hollow fiber membranes according to the present invention can be obtained. Further, to inhibit the influence of the deterioration of the polymer, it is preferable to lower the internal temperature of a drier and the temperature of a drying air from 60°C (the conventional temperatures) to 40°C, and to use an inert gas such as a nitrogen gas or the like for a drying atmosphere, to thereby decrease the rate of oxidation reaction due to heat for drying.

The air capacity and the airflow velocity in the air drier is adjusted in accordance with the amount of a bundle of hollow fiber membranes and the total moisture content of the same. The sufficient air capacity is 0.01 to 5 L/sec. (per one hollow fiber membrane). As a medium to be fed, it is preferable to use an inert gas. When an air is used as an ordinary gas, a dehumidified air is preferably used. The drying temperature is from 20 to 80°C. When the drying temperature is high, the bundle of hollow fiber membranes is significantly damaged, and the drying of the same tends to be partially uneven. Therefore, the drying temperature is preferably from a room temperature to about 60°C as the highest. For example, when the moisture content of the bundle of hollow fiber membranes is 200 to 1,000 mass %, it is possible to dry the bundle of hollow fiber membranes at a relatively high temperature of 60 to 80°C. However, it is preferable to dry the same at a relatively low temperature of from a room temperature to about 60°C as the highest, as the moisture content of the same gradually decreases to about 1 to about 50 mass % in association with the proceeding of the drying.

It is ideal to dry a bundle of hollow fiber membranes with no difference among each of the moisture contents of not only the center portions and the outer peripheral portions of the hollow fiber membranes, but also the center portion and the outer peripheral portion of the bundle of hollow fiber membranes. As a matter of fact, there are slight differences in moisture content among the center portions and the outer peripheral portions of the hollow fiber membranes and those of the bundle of the same. Accordingly, the terms of "moisture content" referred to herein mean an average moisture content which is determined by calculating the moisture contents of several points of each of the center portion, intermediate portion and outer peripheral portions of the bundle of hollow fiber membranes, and averaging these moisture contents thereof. When the bundle of hollow fiber membranes is not expected to have so high accuracy in performance, the moisture content thereof may be determined based on the calculation of the total moisture content of the bundle of hollow fiber membranes, although such a bundle of hollow fiber membranes is lower in accuracy.

A small difference among the moisture contents of the center portion, intermediate portion and outer peripheral portion of the bundle of hollow fiber membranes indicates one of preferred embodiments to manufacture high quality products. Therefore, it is needed to pay special technical cares to the drying method. For example, when an inert gas such as a nitrogen gas, an argon gas or the like is used as a medium to be fed, the bundle of membranes is dried under substantially an anoxia condition, and therefore, the hydrophilic polymer is hard to deteriorate or decompose. Therefore, it becomes possible to raise the drying temperature.

The air capacity and the drying temperature are determined by the total moisture content in the bundle of hollow fiber membranes. When the moisture content is high, the air capacity is set at a relatively high rate of, for example, 0.1 to 5 L/sec. (per one hollow fiber membrane), and the drying temperature is set at a relatively high temperature of 50 to 80°C. When the moisture content of the bundle of hollow fiber membranes becomes lower in association with the proceeding of the drying, the following drying method may be employed: that is, the air capacity is controlled to be gradually decreased to, for example, not larger than 0.1 L/sec. (per one hollow fiber membrane), while the temperature is also gradually decreased to a room temperature in association with the air capacity control.

A small difference in moisture content among each of the center portion, intermediate portion and outer peripheral portion of the bundle of hollow fiber membranes is obtained as a result of the fact that the drying of the above respective portions of the bundle of hollow fiber membranes has concurrently and evenly proceeded. The alternate inversion of the air-feeding direction during the air drying of the bundle of hollow fiber membranes means that the direction of an air fed to the bundle of hollow fiber membranes in the air drier is changed 180 degrees alternately, and that an air is fed to the same bundle from such an alternately changed direction. This air feeding direction-inverting operation can be realized by an apparatus so devised that a bundle of hollow fiber membranes itself can be rotated 180 degrees alternately relative

to an air-feeding direction. Otherwise, an air drier may be so designed that an air is fed to a bundle of hollow fiber membranes which is fixed, from a direction which is inverted 180 degrees, alternately.

The air-feeding means is not particularly limited. Especially in the case of a circulation type air-feeding drier, a device which inverts a bundle of hollow fiber membranes as an object, 180 degrees alternately, functions rationally in view of not only designing but also operation. This apparently ordinary drying method which includes the inverting operation produces an unexpected effect especially in a specific material for a bundle of hollow fiber membranes, in view of the quality management to prevent the partial sticking of the bundle of hollow fiber membranes, and such an unexpected effect has not been observed in the drying of general materials.

The air feeding direction-inverting time interval during the drying operation is changed in accordance with various factors such as the total moisture content of the bundle of hollow fiber membranes to be dried, the air velocity, the air capacity, the drying temperature, the degree of dehumidifying an air, etc. Since even drying of the bundle of hollow fiber membranes is needed, it is necessary to frequently invert the air-feeding direction. The air feeding direction-inverting time interval which is practically set for industrial use is affected by the moisture content of the bundle of hollow fiber membranes found after the start of drying. For example, suppose a case where the total drying time of so long as 24 hours is set, including 1 to 4 hours for drying a bundle of hollow fiber membranes at a high temperature of 60 to 80°C, for example, at 65°C, and 1 to 20 hours for drying the same at a temperature of 25 to 60°C, for example, at about 30°C. In this case, the air-feeding direction can be mechanically inverted at time intervals of about 30 to about 60 minutes. Suppose another case where a bundle of hollow fiber membranes is dried at a high temperature of about 60 to about 80°C and at a relatively large air capacity of about 0.1 to about 5 L/sec. (per one hollow fiber membrane) in the early stage where the total moisture content of the bundle is large. In this case, a part of the same bundle which firstly and directly receives an air flow is dried relatively quick. Therefore, the air-feeding direction is repeatedly inverted at time intervals of about 10 to about 120 minutes for about 1 to about 5 hours. Especially, in the first stage, it is preferable to invert the air-feeding direction at time intervals of 10 to 40 minutes. When the difference in moisture content between the center portion and the outer peripheral portion of the bundle of hollow fiber membranes becomes smaller and stable, the drying temperature is gradually decreased to a room temperature of about 30°C, and the air-feeding direction may be inverted repeatedly at time intervals of about 30 to about 90 minutes for a relatively long time of about 1 to about 24 hours. The air capacity and the change of the drying temperature for this operation may be optionally selected in consideration of the moisture content of the bundle of hollow fiber membranes. The moisture content of the same bundle is quantitatively determined as follows. When the moisture content of the same bundle reaches not larger than about 50 to about 100 mass % based on the calculation of the moisture contents of the center portion and outer peripheral portion of the same bundle, the air capacity and the drying temperature may be appropriately changed while observing the drying state of the bundle. Otherwise, the bundle of hollow fiber membranes may be dried while mechanically setting the air feeding direction-inverting time at predetermined time intervals. On the other hand, there are factors which tend to change depending on the situation and the rule of thumb: that is, the air feeding-inverting time interval and the total drying time are determined while observing the degree of drying of the same bundle.

In this connection, the moisture content (mass %) of the bundle of hollow fiber membranes of the present invention can be readily calculated by the equation: the moisture content (mass %) = (a - b) X 100/b in which **a** represent the mass of the bundle of hollow fiber membranes before the drying, and **b** represents the mass of the same after the drying.

Further, it is also one of effective methods to dry a bundle of hollow fiber membranes by irradiation with microwaves under a reduced pressure. As the drying conditions for this method, it is preferable to irradiate the bundle of hollow fiber membranes with microwaves having an output of 0.1 to 100 KW under a reduced pressure of not higher than 20 KPa. The frequency of the microwave is 1,000 to 5,000 MHz, and preferably, the highest temperature of the bundle of hollow fiber membranes found during the drying treatment is not higher than 90°C.

The decompression degree may be appropriately selected in accordance with the output of microwaves, the total moisture content of the bundle of hollow fiber membranes and the number of the hollow fiber membranes in the bundle. To prevent an increase in the temperature of the bundle being dried, the decompression degree is preferably not larger than 20 kPa, more preferably not larger than 15 kPa, still more preferably not larger than 10 kPa. When the decompression is insufficient, the moisture-evaporating efficiency tends to lower, and concurrently, the temperature of polymers which form the hollow fiber membranes becomes higher. In such a case, particularly, the hydrophilic polymer is likely to deteriorate and decompose due to heat. The higher the decompression degree, the better it is to inhibit an increase in the temperature and to improve the drying efficiency. However, it costs higher to maintain the closeness of the apparatus. Therefore, the decompression degree is preferably not lower than 0.1 kPa, more preferably not lower than 0.25 kPa, still more preferably not lower than 0.4 kPa.

The higher the output of microwaves, the better it is for the reduction of the drying time. For example, in the case of hollow fiber membranes containing a hydrophilic polymer, the hydrophilic polymer tends to deteriorate or decompose due to excessive drying and heating, and thus, the hollow fiber membranes become poor in wettability in use. Therefore, it is preferable not to increase the output of microwave so much. It is also possible to dry a bundle of hollow fiber membranes even by irradiation with microwaves having an output of less than 0.1 kW. However, the drying time

becomes longer, which may lead to a decrease in the treated amount. The optimal values of the decompression degree and the output of microwaves for use in combination differ depending on the moisture content of the bundle of hollow fiber membranes and the number of bundles to be treated. Therefore, preferably, such optimal values are determined as a result of trial and error.

Rough criteria for the drying conditions are set as follows: for example, when a bundle of 20 hollow fiber membranes each one of which has a moisture content of 50 g is dried, the total moisture content is 1,000 g (50 g X 20 = 1,000 g); the output of microwave is 1.5 kW and the decompression degree is 5 kPa, appropriately for this condition.

The output of microwaves is preferably 0.1 to 80 kW, more preferably 0.1 to 60 kW, still more preferably 0.1 to 20 kW. When careful attentions are paid to the quality of a bundle of hollow fiber membranes, especially, the bundle of membranes is dried preferably by irradiation with microwave having an output of not higher than 12 kW under a reduced pressure of 0.1 to 20 kPa. The output of microwave is determined by, for example, the total number of hollow fiber membranes and the total moisture content thereof. While sudden irradiation of hollow fiber membranes with microwave having a high output is effective to dry the hollow fiber membranes in a shorter time, the membranes are likely to be partially denatured and shrunk or deformed.

In the case where, for example, a water-retaining agent is added to hollow fiber membranes when the same membranes are dried by irradiation with microwaves, the drying by way of microwaves having a high output is generally considered to cause the splashing of the water-retaining agent. In addition, if this drying by irradiation with microwave is carried out under a reduced pressure, it is supposed that an adverse influence may be given on the hollow fiber membranes. Because of such adverse influences supposed, it has hitherto never been considered to irradiate hollow fiber membranes with microwaves under a reduced pressure.

The irradiation of a bundle of hollow fiber membranes with microwaves under a reduced pressure is effective to accelerate the evaporation of an aqueous solution even at a relatively low temperature of not higher than 60°C or not higher than 40°C, and to cause the reduced pressure to evenly act on the bundle of hollow fiber membranes up to the intermediate portion thereof and further up to the center portion thereof. This means that microwaves having a lower output can be used to dry the bundle of hollow fiber membranes. Therefore, this drying method produces double effects that the deterioration of poly(vinylpyrrolidone) and the damage such as the deformation of the hollow fiber membranes due to the adverse influences of high output microwaves and high temperatures can be remarkably prevented. Such actions and effects and such a technical significance can be specifically exhibited only in the filed of very specialized techniques for the quality management and drying of a bundle of hollow fiber membranes. These actions, effects and technical significance have never been suggested by any of the prior art.

Accordingly, a bundle of hollow fiber membranes is dried by irradiation with microwaves under a reduced pressure. This drying can be carried out in one stage, using microwaves having a constant output. In another preferred embodiment, so-called multistage drying may be employed: that is, the drying is carried out in multiple stages, while the output of microwaves is being sequentially decreased in several steps, as the drying proceeds. Herein, the significance of the multistage drying is described below.

In the case where a bundle of hollow fiber membranes is dried by using microwaves under a reduced pressure and at a relatively low temperature of about 30 to about 90°C, a multistage drying method is more effective for such drying: that is, the output of microwaves is sequentially decreased in association with the proceeding of the drying of the bundle of hollow fiber membranes. In the multistage drying method, the decompression degree, the temperature, the output of microwaves and the irradiation time are selected in consideration of the total amount of the hollow fiber membranes to be dried, and the industrially allowable and proper drying time.

The multistage drying may be carried out in an optionally selected number of stages. For example, the drying may be carried out in 2 to 6 stages, particularly 2 to 3 stages in view of the productivity. The number of stages for changing the output of microwaves is selected according to the total moisture content of a bundle of hollow fiber membranes, and in consideration of the microwave irradiation time, as follows. When the total moisture content of a bundle of hollow fiber membranes is relatively large, the bundle is dried, for example, at a temperature of not higher than 90°C under a reduced pressure of about 5 to about 20 kPa, while the output of microwaves is set at 30 to 100 kW in the first stage, 10 to 30 kW in the second stage and 0.1 to 10 kW in the third stage. The number of stages for decreasing the output of microwaves may be increased to, for example, 4 to 8, in the case where there is a large difference in output of microwaves: for example, the output is 90 kW in the early stage where the moisture content is higher, and it is 0.1 kW in the final stage of the drying.

An atmosphere of a reduced pressure is used for the drying, which leads to an advantage that a bundle of hollow fiber membranes can be properly dried, even when irradiated with microwaves having a relatively low output. For example, a bundle of hollow fiber membranes can be dried by irradiation with microwaves having an output of 10 to 20 kW for about 10 to about 100 minutes in the first stage, irradiation with microwaves having an output of 3 to 10 kW for about 5 to about 80 minutes in the second stage, and irradiation with microwaves having an output of 0.1 to 3 kW for about 1 to about 60 minutes in the third stage. Preferably, the output and the irradiation time of microwaves in each stage are decreased in relation to the decreasing degree of the total moisture content of the hollow fiber membranes.

This drying method is very mild for the bundle of hollow fiber membranes, and is never anticipated from the inventions of the prior arts (Patent Literatures 16 to 18). Therefore, the actions and effects are technically significant.

In other embodiment, irradiation with microwaves having a low output of not higher than 12 kW is preferable, when the moisture content of a bundle of hollow fiber membranes is not higher than 400 mass %. For example, when the moisture amount of a whole of a bundle of hollow fiber membranes is about 1 to about 7 kg, the bundle can be evenly dried by a method in which the irradiation output and the irradiation time of microwaves is controlled in accordance with the degree of drying as follows: that is, the bundle is dried at not higher than 80°C, preferably not higher than 60°C, under a reduced pressure of about 3 to about 10 kPa, while irradiating the bundle with microwaves having an output of not higher than 12 kW, for example, 1 to 5 kW, for 10 to 240 minutes, followed by microwaves having an output of 0.5 to 1 kW for 1 to 240 minutes and microwaves having an output of 0.1 to 0.5 kW for 1 to 240 minutes.

Preferably, the decompression degree in each stage is 0.1 to 20 kPa. However, the decompression degree and the output of microwaves in each stage may be appropriately and optionally selected in accordance with a situation and in consideration of the transition of a decrease in the moisture content of the bundle of hollow fiber membranes. For example, in the first stage where the moisture content of the hollow fiber membranes is relatively high, the bundle is dried by irradiation with microwaves having a high output (for example, 10 to 20 kW), while a relatively high decompression degree (for example, 0.1 to 5 kPa) being set; and in the second and third stages, the bundle is dried by irradiation with microwaves having a relatively low output (for example, 0.1 to 5 kW), while a slightly higher decompression degree (for example, 5 to 20 kPa) than that in the first stage being set. The operation of changing the decompression degree in each of the stages attaches more importance to the significance of the irradiation with microwaves under a reduced pressure. Naturally, it is needed to always pay careful attentions to the uniform irradiation of microwaves inside a microwave irradiation apparatus and the exhaust.

In the present invention, the use of the method of irradiation with microwaves under a reduced pressure in combination with the method of inverting the air-feeding direction alternately is one of the effective drying methods for a bundle of hollow fiber membranes, although complicated steps are required for the drying. Each of the microwave irradiation method and the air feeding direction-inverting method has advantages and disadvantages in itself. When high quality products are demanded, both of these methods are employed in combination. For example, a bundle of hollow fiber membranes is dried by the alternate air feeding direction-inverting method in the first stage, until the moisture content thereof reaches about 20 to about 60 mass %, and then, the bundle is dried by irradiation with microwaves under a reduced pressure, in the next stage. In this case, the bundle of hollow fiber membranes may be dried to a predetermined degree by irradiation with microwaves, and then may be dried by the alternate air feeding direction-inverting method. How to employ these method in combination is determined, taken into consideration the quality of hollow fiber membranes to be manufactured by drying, particularly, the quality of a bundle of selectively permeable polysulfone-based hollow fiber membranes which will not be partially stuck to one another in the lengthwise direction. While these drying methods may be concurrently carried out, this is not suitable for practical use, because a complicated apparatus is needed and because the cost therefor becomes higher. Other than those, to use an effective heating method by way of infrared radiation or the like in combination with these methods is included in the scope of the drying methods of the present invention.

The highest temperature of the bundle of hollow fiber membranes during the drying operation is measured as follows: an irreversible thermo label is stuck to a film which protects the bundle of hollow fiber membranes, and the bundle with the film is dried and is then removed after the drying operation, so as to check an indication on the label. The highest temperature of the bundle of hollow fiber membranes during the drying operation is not higher than 90°C, preferably not higher than 80°C, more preferably 70°C. When this highest temperature exceeds 90°C, the membranes tend to change in structure, which may lead to a decrease in the performance of the membranes or to the deterioration of the same due to oxidation. Particularly, in the case of hollow fiber membranes containing a hydrophilic polymer, the hydrophilic polymer is likely to be decomposed by heat. It is therefore needed to prevent an increase in temperature as much as possible. The optimization of the decompression degree and the output of microwaves, and the intermittent irradiation of microwaves are effective to prevent the bundle of hollow fiber membranes from raising in temperature. The lower the drying temperature, the better it is. However, the drying temperature is preferably not lower than 30°C, in view of the cost for maintaining the decompression degree and the saving of the drying time.

The frequency of microwaves for irradiation is preferably 1,000 to 5,000 MHz, more preferably 1,500 to 4,000 MHz, still more preferably 2,000 to 3,000 MHz, when an effect of inhibiting the formation of irradiation spots on the bundle of hollow fiber membranes and an effect of pushing water out of the pores of the membranes are taken into consideration.

In the present invention, it is important to evenly heat and dry the bundle of hollow fiber membranes. In the foregoing drying method by irradiation with microwaves, reflected waves incidental to the generation of microwaves induce uneven heating, and therefore, it is preferable to provide a means for reducing the uneven heating due to the reflected waves. This means is not limited, and may be optionally selected. For example, as one of preferable means therefor, a reflector plate is provided in an oven to reflect the reflected waves so that hollow fiber membranes can be evenly heated, as disclosed in JP-A-2000-340356 (2000).

It is inferred that the employment of this method makes it possible to quickly and evenly remove the moisture in the surfaces of hollow fiber membranes, and to simultaneously inhibit the deterioration of the hydrophilic polymer due to excessive drying or the like, so that the content of the hydrophilic polymer in the outer surfaces of the membranes, which affects the sticking of the membranes, can be even. Therefore, it is very important to provide the means for even heating, in order to efficiently exhibit the effects of the present invention.

The present invention is not limited to the foregoing methods which are merely described as some of the examples. In addition, methods for achieving the effects of the present invention, other than the foregoing drying methods, are also included in the scope of the present invention.

In the present invention, the wording of "substantially dried stated" means that the moisture content of a bundle of hollow fiber membranes is within a range of 1 mass % to 5 mass %.

The bundle of hollow fiber membranes of the present invention is suitable for use in a blood purifier, because of the foregoing characteristics.

When the bundle of hollow fiber membranes of the present invention is used in a blood purifier, the burst pressure of the bundle of hollow fiber membranes is preferably not lower than 0.5 MPa, and the rate of water permeation of the blood purifier is preferably not smaller than 150 mL/$m^2$/hr./mmHg. When the burst pressure is lower than 0.5 MPa, latent defects which may induce blood leakage can not be detected, and thus, the reliability of the blood purifier for safety may become lower. When the rate of water permeation is smaller than 150 mL/$m^2$/hr./mmHg, the dialyzing efficiency of the blood purifier tends to lower. It is effective to increase the diameters of the pores of the membranes and the number of the pores in order to improve the dialyzing efficiency, while, on the other hand, disadvantages such as a decrease in the strength of the membranes and occurrence of defects concurrently arise. In contrast, in the hollow fiber membrane of the present invention, the diameters of the pores of the outer surface of the membrane are optimized to thereby optimize the porosity of the support layer so that the resistance of the permeated solute can balance with the strength of the membrane. The rate of water permeation is more preferably not smaller than 200 mL/$m^2$/hr./mmHg, still more preferably not smaller than 300 mL/$m^2$/hr./mmHg, particularly preferably not smaller than 400 mL/$m^2$/hr./mmHg, most preferably not smaller than 500 mL/$m^2$/hr./mmHg. When the rate of water permeation is too large, the water-removing control during hemodialysis becomes hard. Therefore, the rate of water permeation is preferably not larger than 2,000 mL/$m^2$/hr./mmHg, more preferably not larger than 1,800 mL/$m^2$/hr./mmHg, still more preferably not larger than 1,500 mL/$m^2$/hr./mmHg, far still more preferably not larger than 1,300 mL/$m^2$/hr./mmHg, particularly not larger than 1,000 mL/$m^2$/hr./mmHg.

The present inventors have examined the physical properties of hollow fiber membranes for use in blood purifiers. Generally, modules for use in blood purification are subjected to leak tests by compressing the interiors or exteriors of the hollow fiber membranes with an air, so as to check the defects of the hollow fiber membranes and the modules in the final stage for providing products. When some leakage is detected in a module by means of a compressed air, such a module is scrapped as a defective, or is repaired. The air pressure for use in the leak tests, in many cases, are several times larger than the proof pressure (usually 500 mmHg) for hemodialyzers. However, the present inventors have found out that, in the case of hollow fiber type blood-purifying membranes having particularly high water permeability, minute flaws, crushes and bursts of hollow fiber membranes, which can not be detected by usual leak tests, often lead to the cutting and pin holes of the membranes which would occur in the course of the manufacturing steps subsequent to the leak tests (mainly, the steps of sterilization and packing), the transportation thereof or the handling thereof at clinical sites (unpacking or priming). Such defects of the membranes induce further troubles such as the leakage of blood during treatments, etc. The present inventors have intensively investigated these events, and found that the latent defects of the hollow fibers which lead to the cutting and pin holes of the hollow fibers during clinical treatments can not be detected by the pressure of the usual compression leak tests, and that a higher pressure is needed to detect such defects. The present inventors have further found that the reduction of the thickness deviation of hollow fiber membranes is effective to avoid the occurrence of such latent defects as mentioned above. The present invention is accomplished based on these findings.

The burst pressure referred to in the present invention is an index of the pressure resistant performance of hollow fiber membranes fabricated into a module. The burst pressure is measured by compressing the interior of a hollow fiber membrane with a gas, and gradually increasing the pressure so as to find a pressure which bursts the hollow fiber membrane when the hollow fiber membrane can not withstand the internal pressure gradually increased. A higher and higher burst pressure leads to a lower possibility of occurrence of cutting or pin holes of hollow fiber membranes in use. Therefore, the burst pressure is preferably not lower than 0.5 MPa, more preferably not lower than 0.55 MPa, still more preferably not lower than 0.6 MPa. When the burst pressure is lower than 0.5 MPa, hollow fiber membranes may have latent defects. A higher and higher burst pressure is preferable. In order to mainly increase the burst pressure, the thickness of a hollow fiber membrane is increased, or the porosity of a membrane is excessively decreased. However, in this case, desired membrane performance may not be obtained from the resultant membrane. Therefore, the burst pressure is preferably not higher than 2.0 MPa, more preferably lower than 1.7 MPa, still more preferably lower than 1.5 MPa, far still more preferably lower than 1.3 MPa, and particularly lower than 1.0 MPa, when hollow fiber membranes

are used as blood-dialyzing membranes.

The thickness deviation, i.e., non-uniformity in the thickness of 100 hollow fiber membranes in a module, found when the sections of the membranes are observed, is preferably not smaller than 0.6. When even one hollow fiber membrane, out of the 100 hollow fiber membranes, has a thickness deviation of smaller than 0.6, such a hollow fiber membrane has a possibility of causing a leakage when the module is used in a clinical site. The thickness deviation referred to in the present invention is not represented by an average value, but is represented by a minimum value among the thickness deviations of 100 hollow fiber membranes. The higher the thickness deviation, the better it is, because the uniformity of the membranes can be improved, because the occurrence of latent defects can be prevented, and because the burst pressure can be increased. Therefore, the thickness deviation of membranes is more preferably not smaller than 0.7, still more preferably not smaller than 0.8, far still more preferably not smaller than 0.85. When the thickness deviation is too small, the latent defects of the membrane tend to actually occur, and the burst pressure of the membrane decreases, which may lead to blood leakage.

To obtain a thickness deviation of not smaller than 0.6, for example, it is preferable to strictly uniform the widths of the slits of spinning nozzles, namely, the injection outlets for a spinning dope. Generally used as spinning nozzles for hollow fiber membranes are tube-in-orifice type nozzles each of which comprises an annular portion which injects a spinning dope, and a hole, inside the annular portion, which injects a core solution as a hollow portion-forming material. The slit width indicates the width of the outer annular portion which injects the spinning solution. By decreasing the variation in the slit width, the thickness deviation of spun hollow fiber membrane can be reduced. Specifically, the ratio of the maximum value to the minimum value of the slit width is adjusted to not smaller than 1.00 and not larger than 1.11. The difference between the maximum value and the minimum value is preferably not larger than 10 μm, more preferably not larger than 7 μm, still more preferably not larger than 5 μm, far still more preferably not larger than 3 μm. It is also effective to optimize the temperature of the nozzles, and the nozzle temperature is preferably 20 to 100°C. When the nozzle temperature is lower than 20°C, the nozzle temperature can not be stabilized because of the influence of a room temperature, and injection spots of the spinning dope likely occur. Therefore, the nozzle temperature is more preferably not lower than 30°C, still more preferably not lower than 35°C, far still more preferably not lower than 40°C. When the nozzle temperature exceeds 100°C, the viscosity of the spinning dope may excessively lower, and the injection of the spinning dope becomes instable, or the deterioration or decomposition of the hydrophilic polymer may be accelerated. Therefore, the nozzle temperature is more preferably not higher than 90°C, still more preferably not higher than 80°C, far still more preferably not higher than 70°C.

As a method of raising the burst pressure, it is also effective to decrease the flaws of the surfaces of hollow fiber membranes or the amounts of foreign matters and bubbles in the surfaces of the hollow fiber membranes, to thereby decrease the latent defects thereof. As a method of decreasing the flaws of the surfaces of hollow fiber membranes, it is effective to optimize materials for rollers and guides for use in the step of manufacturing hollow fiber membranes, and to optimize the surface roughness of such membranes. It is also effective that, when a module is fabricated using a bundle of hollow fiber membranes or when a bundle of hollow fiber membranes is inserted into a casing for a module, a device to allow the hollow fiber membranes not to contact the casing or a device to make it hard to rub the hollow fiber membranes with one another is provided. In the present invention, preferably, the rollers to be used are planished at their surfaces, so as to prevent the hollow fiber membranes from having flaws thereon upon slipping. Preferably, the guides to be used are subjected to mat finish or knurling process at their surfaces, so as avoid the contact resistance with the hollow fiber membranes as much as possible. Preferably, the bundle of hollow fiber membranes is not directly inserted into the module casing. For example, the bundle of hollow fiber membranes is wrapped in an embossed film and then is inserted into the module casing, followed by removal of the film alone from the module casing.

As a method of preventing foreign matters from entering the hollow fiber membranes, it is effective to use raw materials containing less foreign matters, or to filter a spinning dope to thereby reduce the amount of foreign matters. In the present invention, it is preferable to use a filter having pores with diameters smaller than the thickness of the hollow fiber membranes. This is described in more detail. A spinning dope homogeneously dissolved is allowed to pass through a sintered filter having pores with diameters of 10 to 50 μm, provided between a dissolution tank and nozzles. It is sufficient to carry out the filtration at least once. When the filtration treatment is carried out in several stages, the diameter of the pores of a filter to be used is gradually decreased, as the order of the stage is closer and closer to the final stage. This method is preferable to improve the filtration efficiency and to prolong the lifetime of the filters. The pore diameter of the filter is more preferably 10 to 45 μm, still more preferably 10 to 40 μm. When the pore diameter is too small, the back pressure tends to increase, and the quantitative determination tends to lower.

As a method of preventing bubbles from entering the hollow fiber membranes, it is effective to degas the polymer solution for the membranes. Stationary degassing or decompression degassing may be carried out, depending on the viscosity of the spinning dope. That is, after the inner side of the dissolution tank is decompressed to -100 to -750 mmHg, the same tank is sealed and is left to stand for 5 to 30 minutes. This operation is repeated several times to degas the spinning dope. When the decompression degree is too low, it is needed to repeatedly carry out the degassing treatment an increased number of times, which requires a longer time for the treatment. When the decompression degree is too

high, the cost for increasing the closeness of the system becomes higher. The total treating time is preferably 5 minutes to 5 hours. When the treating time is too long, the hydrophilic polymer is likely decomposed and deteriorated due to the influence of the decompression. When the treating time is too short, the effect of degassing becomes insufficient.

In the present invention, the porosity of the outer surface of the hollow fiber membrane is preferably 8 to 25%, and the average pore area of the outer surface thereof is preferably 0.3 to 1.0 $\mu m^2$, in order to impart the above described characteristics to the membrane. When the porosity and the average pore area are too small, the water permeability of the hollow fiber membrane tends to decrease. Further, in such a case, the module-fabricating workability tends to lower, since the hollow fiber membranes are stuck to one another because of the hydrophilic polymer on the outer surfaces of the membranes, while the membranes are being dried. Therefore, the porosity is more preferably not lower than 9%, still more preferably not lower than 10%.

The average pore area is more preferably not smaller than 0.4 $\mu m^2$, still more preferably not smaller than 0.5 $\mu m^2$, far still more preferably not smaller than 0.6 $\mu m^2$. On the contrary, when the porosity and the average pore area are too large, the percentage of void of the hollow fiber membrane becomes too high, and the burst pressure tends to lower. Therefore, the porosity is more preferably not higher than 23%, still more preferably not higher than 20%, far still more preferably not higher than 17%, and particularly not higher than 15%. The average pore area is more preferably not larger than 0.95 $\mu m^2$, still more preferably not larger than 0.90 $\mu m^2$.

EXAMPLES

Hereinafter, the effectiveness of the present invention will be described by way of Examples thereof, which should not be construed as limiting the scope of the present invention in any way. In this regard, the methods of evaluating the physical properties in the following Examples are described below.

1. Water Permeability

A circuit on the side of the blood outlet of a dialyzer (nearer to the outlet than a pressure-measuring point) is pinched with forceps to seal the circuit. Pure water maintained at 37°C is poured into a compression tank, and is fed to a dialyzer maintained at a constant temperature in a thermostat of 37°C, while the pressure being controlled with a regulator. The amount of a filtrate flowing from the side of a dialyzing fluid is measured with a graduated cylinder. The pressure difference of the membranes (TMP) is defined by the equation:

$$TMP = (Pi + Po)/2$$

[wherein Pi represents a pressure on the side of the inlet of the dialyzer, and Po represents a pressure on the side of the outlet of the same].

TMP is changed at 4 points to measure the filtered flow amounts. The water permeability of the hollow fiber membrane (mL/hr./mmHg) is calculated from the gradient of the relationship between TMP and the filtered flow amount. It is to be noted that the correlation function between TMP and the filtered flow amount should be not smaller than 0.999, and that TMP is measured under a pressure of not higher than 100 mmHg so as to lessen an error in pressure loss due to the circuit. The water permeability of the hollow fiber membrane is calculated from the membrane area and the water permeability of the dialyzer:

$$UFR(H) = UFR(D)/A$$

[wherein UFR(H) represents the water permeability of the hollow fiber membrane (mL/$m^2$/hr./mmHg); UFR(D) represents the water permeability of the dialyzer (mL/hr./mmHg); and A represents the membrane area ($m^2$) of the dialyzer].

2. Calculation of Membrane Area

The membrane area of the dialyzer is calculated based on the inner diameter of the hollow fiber membranes:

$$A = n \times \pi \times d \times L$$

[wherein **n** represents the number of the hollow fiber membranes in the dialyzer; $\pi$ represents the ratio of the circumference

of a circle to its diameter; **d** represents the inner diameter (m) of the hollow fiber membranes; and L represents the effective length (m) of the hollow fiber membranes in the dialyzer].

3. Burst Pressure

The dialyzing fluid side of a module which comprises about 10,000 hollow fiber membranes is filled with water and is capped. A dry air or a nitrogen gas is fed from the bloodside of the module at a room temperature so as to compress the hollow fiber membranes at a rate of 0.5 MPa/minute. The internal pressure in the hollow fiber membranes is increased to find an air pressure which bursts the hollow fiber membranes and causes bubbles in the liquid filling the dialyzing fluid side of the module. This air pressure is defined as a burst pressure.

4. Thickness Deviation

The sections of 100 hollow fiber membranes are observed with a projector of a magnification of 200. One hollow fiber membrane which has the largest difference in the thickness at its section is selected out of the hollow fiber membranes in one visual field, and the thickness of the thickest portion and that of the thinnest portion of this hollow fiber membrane are measured:

Thickness deviation = the thickness of the thinnest portion/the thickness of the thickest portion.

The membrane thickness is perfectly uniform when the thickness deviation is one (thickness deviation = 1).

5. Eluting Amount of Hydrophilic Polymer

The measurement of the eluting amount of poly(vinylpyrrolidone) as a hydrophilic polymer is described.

<Module of dried hollow fiber membranes>

A physiological salt solution is allowed to pass through the passages on the dialyzing fluid side of a module at a rate of 500 mL/minute for 5 minutes, and then is allowed to pass through the passages on the bloodside of the module at a rate of 200 mL/minute. After that, the physiological salt solution is passed from the bloodside to the dialyzing fluid side at a rate of 200 mL/minute for 3 minutes, while being filtered.

<Module of wet hollow fiber membranes>

After the filling liquid is drawn out of the module, the module of the wet hollow fiber membranes is treated in the same manner as in the module of the dried hollow fiber membranes.

Extraction is made from the hollow fiber membrane module which has been subjected to the above-described priming treatment, according to the method regulated in the approval manufacturing standards for dialytic artificial kidney devices. Then, the poly(vinylpyrrolidone) in the extracted solution is quantitatively determined by the colorimetric method.

This is described in detail. Pure water (100 ml) is added to the hollow fiber membranes (1 g), and extraction is made from the wet hollow fiber membranes at 70°C for one hour. The extracted solution (2.5 ml) is sufficiently mixed with a 0.2 mol aqueous citric acid solution (1.25 ml) and a 0.006N aqueous iodine solution (0.5 ml), and the mixture is left to stand at a room temperature for 10 minutes. After that, the absorbance of the mixture at 470 nm is measured. Determination is made based on an analytical curve found by the measurement according to the above method, using poly(vinylpyrrolidone) as a sample.

6. Content of Hydrophilic Polymer in Outer Surface of Membrane

The content ratio of the hydrophilic polymer to the hydrophobic polymer is determined by the X-ray photoelectron spectroscopy (ESCA, i.e., electron spectroscopy for chemical analysis). The measurement where a polysulfone-based polymer as the hydrophobic polymer and poly(vinylpyrrolidone) (or PVP) as the hydrophilic polymer are used is described as one of examples. One hollow fiber membrane is stuck on a sample table and is subjected to an X-ray photoelectron spectroscopy (ESCA). The measurement is made under the following conditions.

Measuring apparatus: ULVAC-PHI ESCA5800
Excited X-ray: MgKα-ray
X-ray output: 14 kV, 25 mA
Photoelectron escape angle: 45°
Diameter for analysis: 400 μm ϕ
Pass energy: 29.35 eV
Resolution: 0.125 eV/step
Degree of vacuum: not higher than about $10^{-7}$ Pa

The content of PVP in the surface of the hollow fiber membrane is calculated from the found value (N) of nitrogen and the found value (S) of sulfur by the following equation (in which the molecular weight of poly(vinylpyrrolidone) is 111; that of polyethersulfone, 232; and that of polysulfone, 442):

<Equation for Membrane of PES with PVP>

$$\text{PVP content (Hpvp) [mass \%]} = 100 \times (N \times 111)/(N \times 111 + S \times 232)$$

<Equation for Membrane of PSf with PVP>

$$\text{PVP content (Hpvp) [mass \%]} = 100 \times (N \times 111)/(N \times 111 + S \times 442)$$

7. Porosity of Outer Surface of Hollow Fiber Membrane

The outer surfaces of hollow fiber membranes are observed with an electron microscope of a magnification of 10,000 and are photographed (SEM photographs). The images of the outer surfaces of the hollow fiber membranes are processed with an image-analyzing software to thereby determine the porosity of the outer surfaces of the hollow fiber membranes. As the image-analyzing software, for example, Image Pro Plus (Media Cybernetics, Inc.) is used. The fetched image is subjected to an emphasis/filtering operation, so as to discriminate the pores from the closed portions of the outer surface of the membrane. Then, the pores are counted. Some of the pores, in which the polymer chains of the underlying layer are observed, are combined and are regarded as one pore. The area (A) of the measured region and the accumulating total (B) of the areas of the pores within the measured region are obtained to determine the porosity (%): the porosity (%) = B/A X 100. This operation is carried out for each of 10 visual fields to obtain an average of the results. In the initial operation, scale setting is made, and in the counting, the pores on the boundary around the measured region are not extruded.

8. Average Pore Area of Pores of Outer Surface of Hollow Fiber Membrane

The pores are counted in the same manner as above, and the area of each of the pores is determined. In the counting, the pores on the boundary around the measured region are excluded. This operation is carried for each of 10 visual fields to obtain the average of all the pore areas.

9. UV Absorbance (220 to 350 nm)

Pure water (100 ml) is added to the hollow fiber membranes (1 g), and extraction is made from the wet hollow fiber membranes at 70°C for one hour. The absorbance of the extracted solution at 200 to 350 nm is measured with a spectrophotometer (U-3000, manufactured by Hitachi, Ltd.), and the maximum absorbance within this wavelength region is found.

10. Endotoxin Concentration

A dialyzing fluid containing endotoxin at a concentration of 200 EU/L is fed at a flow rate of 500 mL/minute from the dialyzing fluid inlet of a module, and is filtered at a filtration rate of 15 mL/minute from the outer side of the hollow fiber membranes to the inner side thereof for 2 hours. The filtered dialyzing fluid is reserved, and the endotoxin concentration of the reserved dialyzing fluid is measured. The endotoxin concentration is analyzed with Limulus ES II TEST WAKO (manufactured by Wako Pure Chemical Industries, Ltd.), according to the method (the inversion method for

checking gelation) described in the manual attached to the apparatus.

11. Blood Leak Test

Bovine blood which is admixed with citric acid to be inhibited from coagulation and which is maintained at 37°C is fed to a blood purifier at a rate of 200 mL/minute, and is filtered at a rate of 20 mL/minute. The resulting filtrate is returned to the blood to thereby form a circulation system. After 60 minutes has passed, the filtrate of the blood purifier is collected, and red portions in the filtrate, due to the leakage of red blood cells, are visually observed. This blood leak test is conducted for each of 30 blood purifiers in either of Examples and Comparative Examples, and the number of modules which permit the blood to leak from their adhesive resin portions is counted.

12. Sticking of Bundle of Hollow Fiber Membranes

About 10,000 hollow fiber membranes are bundled, and the bundle of the hollow fiber membranes is inserted into a module casing of 30 to 35 mm $\phi$, which is then sealed with a two-pack type polyurethane resin. Thus, a module is accomplished. The leak test is conducted for each of 30 modules on the standard, and the number of the modules which are failed in urethane resin seal is counted.

13. Partial Sticking of Bundle of Hollow Fiber Membranes

A SK cutter is used to cut a bundle of dried hollow fiber membranes, wrapped in a film, at 2 cm intervals along the lengthwise direction, so as not to fuse the hollow fiber membranes to one another due to heat which is generated in association with the cutting of the bundle of the dried hollow fiber membranes. The sliced bundle of the hollow fiber membranes is slowly dropped onto paper on a table, while being destaticized (SJ-F020 manufactured by KEYENCE), so as to visually observe the presence or absence of a mass of a plurality of the hollow fiber membranes. In the visual observation, the hollow fiber membranes which are apparently fused at their sections to form a mass are not categorized to the group of the partially stuck hollow fiber membranes. When the fusion of the hollow fiber membranes is appreciably severe, a cutter to be used for cutting a bundle of hollow fiber membranes should be appropriately selected.

14. Moisture content

The moisture content (mass %) of a bundle of hollow fiber membranes is calculated from the mass (a) of the same bundle found before the drying and the mass (b) of the same bundle found after the drying, by the following equation:

$$\text{Moisture content (mass \%)} = (a - b) \times 100/b$$

(Example 1)

Polyethersulfone (SUMIKAEXCEL® 4800P, manufactured by Sumika Chemtex Co., Ltd.) (17 mass %), polyvinylpyrrolidone) (Kollidon® K-90, manufactured by BASF) (2.9 mass %), DMAc (77.1 mass %) and RO water (3 mass %) were homogeneously dissolved at 50°C. Then, a vacuum pump was used to decompress the interior of a system to -500 mmHg, and the system was immediately sealed so as not to change the composition of the membrane-forming solution due to the evaporation of the solvent or the like, and the system was left to stand for 15 minutes. This operation was repeated three times to degas the membrane-forming solution. The same solution was allowed to pass through a two-staged sintered filter (15 $\mu$m and 15 $\mu$m). This solution was then injected from tube-in-orifice nozzles heated to 80°C, concurrently with an aqueous solution of 55 mass % of DMAc as a hollow portion-forming material which had been previously degassed under a reduced pressure of -700 mmHg for 30 minutes. The strand of the injected solutions was allowed to pass through a drying section with a length of 550 mm, sealed from an external atmosphere by a spinning tube, and was then coagulated in an aqueous solution of 25 mass % of DMAc at 60°C. The resulting wet strand was directly wound onto a hank. The width of the nozzle slits of the tube-in-orifice nozzles was 60 $\mu$m on average, maximum 61 $\mu$m and minimum 59 $\mu$m. The ratio of the maximum value to the minimum value of the slit width was 1.03, and the draft ratio of the membrane-forming solution was 1.06. The rollers which the hollow fiber membranes contacted during the spinning step were all planished at their surfaces, and the guides were all mat-finished at their surfaces.

A bundle of about 10,000 hollow fiber membranes was wrapped in a polyethylene film which was mat-finished at its one surface on the side of the bundle of hollow fiber membranes. The same bundle was then cut into several portions with lengths of 27 cm. The cut portion of the bundle was washed in hot water of 80°C for 30 minutes, and this

washing was repeated four times. This portion of the bundle was heated at 60°C for 3 hours in an air drier having a passage in its lengthwise direction, and then was dried at 30°C for 20 hours. During the period between the start of drying and the completion of drying, the air feeding direction was inverted 180° every one hour. Thus, the bundle of the dried hollow fiber membranes was obtained. The resultant hollow fiber membranes had an inner diameter of 200.1 μm, a thickness of 28.5 μm and a moisture content of 2.4 mass %. The mass ratio of the hydrophilic polymer to the hydrophobic polymer was 3.1 mass %.

The above portion of the bundle was cut at about 2.7 cm intervals along the lengthwise direction to obtain 10 regular portions with lengths of about 2.7 cm. One gram of the dried hollow fiber membranes was weighed from each of the above portions of the bundle, and was then extracted according to the method regulated in the approval manufacturing standards for artificial kidney devices. Then, the UV absorbance of each of the extracted solutions within a wavelength range of 220 to 350 nm was measured. The results are shown in Tables 1 and 2. The extracted solutions obtained from all the portions of the bundle were stable at low levels in UV absorbance. The partial sticking of the hollow fiber membranes was not observed, and thus, the module-fabricating workability of the hollow fiber membranes was good.

A blood purifier was fabricated, using the obtained hollow fiber membranes, so as to carry out a leak test. As a result, there was observed no failure in adhesion due to the sticking of the hollow fiber membranes to one another.

The blood purifier was filled with RO water, and then was irradiated with γ-rays at an absorbed dose of 25 kGy for a crosslinking treatment. After the irradiation with γ-rays, the hollow fiber membranes were cut out of the blood purifier, and then were subjected to an elution test. As a result, the amount of eluting PVP was 4 ppm which was a level of no problem.

Each of the blood purifiers was filled with a compressed air under a pressure of 0.1 MPa, and some of the blood purifiers which passed the leak tests, each showing a pressure drop of not higher than 30 mmAq for 10 seconds, were used for the subsequent tests. The hollow fiber membranes were removed from the blood purifier, and the outer surfaces thereof were observed with a microscope. As a result, no defect such as a flaw or the like was observed. Further, fresh bovine blood admixed with citric acid was allowed to pass through the blood purifier at a flow rate of 200 mL/minute and at a filtering rate of 10 mL/minutes. As a result, the leakage of red blood cells was not observed. The amount of endotoxin filtered from the outer side of the hollow fiber membranes to the inner side thereof was not larger than the limit for detection, which was a level of no problem. The results of the analyses are shown in Table 2.

(Comparative Example 1)

A blood purifier was obtained in the same manner as in Example 1, except that a bundle of hollow fiber membranes was dried by heating at 60°C for 20 hours within an air drier having a passage in the lengthwise direction, while an air was being fed from only one direction. The characteristics of the resultant bundle of hollow fiber membranes and the blood purifier are shown in Tables 1 and 2. The UV absorbance (220 to 350 nm) of the bundle of hollow fiber membranes obtained in this Comparative Example had a high level, showing a large fluctuation between each of the sampling sites. Further, the partial sticking of the hollow fiber membranes to one another, although it was slight, occurred, and thus, the module-fabricating workability thereof was poor.

(Comparative Example 2)

A bundle of hollow fiber membranes and a blood purifier were obtained in the same manners as in Example 1, except that the washing of the bundle of hollow fiber membranes was not done, and that the bundle of the wet hollow fiber membranes was dried in the same manner as in Comparative Example 1. The characteristics of the resultant bundle of hollow fiber membranes and the resultant blood purifier are shown in Tables 1 and 2.

The UV absorbance (220 to 350 nm) of the bundle of hollow fiber membranes obtained in this Comparative Example had a high level, showing a large fluctuation between each of the sampling sites, as well as Comparative Example 1. Further, the partial sticking of the hollow fiber membranes to one another occurred, and thus, the module-fabricating workability thereof was poorer.

(Example 2)

Polyethersulfone (SUMIKAEXCEL® 5200P, manufactured by Sumika Chemtex Co., Ltd.) (17.5 mass %), poly(vinylpyrrolidone) (Kollidon® K-90, manufactured by BASF) (3.5 mass %), DMAc (74 mass %) and water (5 mass %) were dissolved at 50°C. Then, a vacuum pump was used to decompress the interior of a system to -500 mmHg, and the system was immediately sealed so as not to change the composition of the membrane-forming solution due to the evaporation of the solvent or the like, and the system was left to stand for 20 minutes. This operation was repeated three times to degas the membrane-forming solution. The same solution was allowed to pass through a two-staged sintered filter (15 μm and 15 μm). This solution was then injected from tube-in-orifice nozzles heated to 65°C, concurrently with

an aqueous solution of 55 mass % of DMAc as a hollow portion-forming material which had been previously degassed under a reduced pressure of -700 mmHg for 2 hours. The strand of the injected solutions was allowed to pass through an air gap section with a length of 600 mm, sealed from an external atmosphere by a spinning tube, and was then coagulated in water of 60°C. The width of the nozzle slits of the tube-in-orifice nozzles was 40 μm on average, maximum 40.3 μm and minimum 39.7 μm. The ratio of the maximum value to the minimum value of the slit width was 1.02, and the draft ratio of the membrane-forming solution was 1.06. The hollow fiber membranes removed from the coagulation bath were allowed to pass through a water bath of 85°C for 45 seconds to thereby remove the solvent and an excess of the hydrophilic polymer, and then were wound up. A bundle of 10,500 hollow fiber membranes was wrapped in a polyethylene film which was the same one as used in Example 1. The same bundle was then immersed in an aqueous solution of 40 vol % of isopropanol at 30°C for 30 minutes, and this immersion was carried out twice for washing. The same bundle was set in a drier of microwave irradiation type and dried under the following conditions: the bundle was irradiated with microwaves having an output of 1.5 KW under a reduced pressure of 7 KPa for 30 minutes, followed by the irradiation with microwaves having an output of 0.5 KW for 10 minutes, and the irradiation with microwaves having an output of 0.2 KW for 8 minutes. The highest temperature of the surface of the bundle of the hollow fiber membranes found during this drying operation was 65°C. The rollers for changing the fiber path during the spinning step were planished at their surfaces, and the stationary guides were mat-finished at their surfaces. The resultant hollow fiber membranes had an inner diameter of 199.9 μm, a thickness of 28.5 μm and a moisture content of 1.6 mass %. The mass ratio of the hydrophilic polymer to the hydrophobic polymer was 3.3 mass %.

The above bundle of hollow fiber membranes was cut at about 2.7 cm intervals along the lengthwise direction to obtain 10 regular portions. One gram of the dried hollow fiber membranes was weighed from each of the portions of the bundle, and was then extracted according to the method regulated in the approval manufacturing standards for artificial kidney devices. Then, the UV absorbance of each of the extracted solutions within a wavelength range of 220 to 350 nm was measured. The results are shown in Tables 1 and 2. The extracted solutions obtained from all the portions of the bundle were stable at low levels in UV absorbance. The partial sticking of the hollow fiber membranes was not observed, and thus, the module-fabricating workability of the hollow fiber membranes was good.

A blood purifier was fabricated, using the obtained hollow fiber membranes. The blood purifier was subjected to the subsequent analyses, without carrying out a crosslinking treatment for the hydrophilic polymer. The hollow fiber membranes were cut out of the blood purifier which was not irradiated with γ-rays, and then were subjected to an elution test. As a result, the amount of eluting PVP was 5 ppm which was a good level.

The hollow fiber membranes were removed from the blood purifier, and the outer surfaces thereof were observed with a microscope. As a result, no defect such as a flaw or the like was observed. Further, the leakage of red blood cells was not observed in a blood leak test using bovine blood.

As a result of the endotoxin permeation test, the amount of endotoxin filtered from the outer side of the hollow fiber membranes to the inner side thereof was not larger than the limit for detection, which was a level of no problem. The results of the analyses are shown in Table 2.

(Comparative Example 3)

Polyethersulfone (SUMIKAEXCEL® 4800P, manufactured by Sumika Chemtex Co., Ltd.) (22.5 mass %), poly(vinylpyrrolidone) (Kollidon® K-30, manufactured by BASF) (9 mass %), DMAc (65.5 mass %) and water (3 mass %) were dissolved at 50°C. Then, a vacuum pump was used to decompress the interior of a system to -350 mmHg, and the system was immediately sealed so as not to change the composition of the membrane-forming solution due to the evaporation of the solvent or the like, and the system was left to stand for 30 minutes. This operation was repeated twice to degas the membrane-forming solution. The same solution was allowed to pass through a two-staged sintered filter (30 μm and 30 μm). This solution was then injected from tube-in-orifice nozzles heated to 45°C, concurrently with an aqueous solution of 50 mass % of DMAc as a hollow portion-forming material which had been previously degassed under a reduce pressure. The strand of the injected solutions was allowed to pass through an air gap section with a length of 80 mm, sealed from an external atmosphere by a spinning tube, and was then coagulated in water of 50°C. The width of the nozzle slits of the tube-in-orifice nozzles was 45 μm on average, maximum 45.5 μm and minimum 44.5 μm. The ratio of the maximum value to the minimum value of the slit width was 1.02, and the draft ratio was 1.06. The hollow fiber membranes removed from the coagulation bath were allowed to pass through a water bath of 85°C for 45 seconds to thereby remove the solvent and an excess of the hydrophilic polymer, and then were wound up. A bundle of 10,000 hollow fiber membranes thus obtained was dried in an air at 80°C, without washing. The sticking and the partial sticking were observed in the bundle of hollow fiber membranes which had been dried, and it was impossible to fabricate a blood purifier, since the adhesive resin on the ends of the bundle was not successfully inserted into each of the hollow fiber membranes.

(Comparative Example 4)

Polyethersulfone (SUMIKAEXCEL® 5200P, manufactured by Sumika Chemtex Co., Ltd.) (16 mass %), poly(vinylpyrrolidone) (Kollidon® K-90, manufactured by BASF) (4 mass %), DMAc (56 mass %) and triethylene glycol (24 mass %) were dissolved at 50°C. Then, a vacuum pump was used to decompress the interior of a system to -500 mmHg, and the system was immediately sealed so as not to change the composition of the membrane-forming solution due to the evaporation of the solvent or the like, and the system was left to stand for 15 minutes. This operation was repeated three times to degas the membrane-forming solution. The same solution was allowed to pass through a filter (30 μm). This solution was then injected from tube-in-orifice nozzles heated to 90°C, concurrently with an aqueous solution of 30 mass % of DMAc as a hollow portion-forming material which had been previously degassed under a reduce pressure of -700 mmHg for 2 hours. The strand of the injected solutions was allowed to pass through a drying section with a length of 650 mm, sealed from an external atmosphere by a spinning tube, and was then coagulated in an aqueous DMAc solution of 70°C. The width of the nozzle slits of the tube-in-orifice nozzles was 100 μm on average, maximum 110 μm and minimum 90 μm. The ratio of the maximum value to the minimum value of the slit width was 1.22, and the draft ratio was 2.41. The resultant hollow fiber membranes were allowed to pass through a water bath of 40°C for 45 seconds to thereby remove the solvent and an excess of the hydrophilic polymer, and then were directly wound up in a wet state. A bundle of about 10,000 hollow fiber membranes thus obtained was wrapped in a polyethylene film which was the same one as used in Example 1. The same bundle was set in a drier of microwave irradiation type and dried under the following conditions: the bundle was dried by irradiation with microwaves having an output of 1.5 KW under an atmospheric pressure for 20 minutes, followed by the irradiation with microwaves having an output of 0.5 KW for 8 minutes, and the irradiation with microwaves having an output of 0.2 KW for 6 minutes. The highest temperature of the surface of the bundle of the hollow fiber membranes found during this drying operation was 98°C. The resultant hollow fiber membranes had an inner diameter of 198.6 μm, a thickness of 33.7 μm and a moisture content of 0.7 mass %. The mass ratio of the hydrophilic polymer to the hydrophobic polymer was 3.5 mass %.

The UV absorbance (220 to 350 nm) of the bundle of hollow fiber membranes obtained in this Comparative Example had a high level, showing a large fluctuation between each of the sampling sites. Further, the partial sticking of the hollow fiber membranes, although it was slight, occurred, and thus, the module-fabricating workability thereof was poor.

A blood purifier was fabricated, using the obtained hollow fiber membranes. The blood purifier was filled with pure water, and then was irradiated with γ-rays at an absorbed dose of 25 kGy for a crosslinking treatment. After the irradiation with γ-rays, the hollow fiber membranes were cut out of the blood purifier, and then were subjected to an elution test. As a result, the amount of eluting PVP was 17 ppm. It was considered that this result came from the fact that the temperature of the bundle was raised since it was dried under an atmospheric pressure, and that the washing of the hollow fiber membranes was insufficient.

Each of the blood purifiers was filled with a compressed air under a pressure of 0.1 MPa, and some of the blood purifiers which showed pressure drops of not higher than 30 mmAq for 10 seconds were used for the subsequent tests. In the blood leak tests using bovine blood, the leakage of red blood cells was observed in two out of 30 modules. It was considered that pin holes and/or bursts occurred in the hollow fiber membranes, because the thickness deviation was small and because the pore diameters of the outer surfaces of the membranes were too large.

As a result of the endotoxin permeation tests, endotoxin filtered from the outer side of the hollow fiber membranes to the inner side thereof was detected. It was inferred that endotoxin was easily permeated, since the amount of PVP in the outer surfaces of the membranes was large, and since the porosity of the membranes was also large. The results of other analyses are shown in Table 1.

(Example 3)

Polysulfone (P-3500, manufactured by AMOCO) (18 mass %), poly(vinylpyrrolidone) (K-60, manufactured by BASF) (9 mass %), DMAc (68 mass %) and water (5 mass %) were dissolved at 50°C. Then, a vacuum pump was used to decompress the interior of a system to -300 mmHg, and the system was immediately sealed so as not to change the composition of the membrane-forming solution due to the evaporation of the solvent or the like, and the system was left to stand for 15 minutes. This operation was repeated three times to degas the membrane-forming solution. The same solution was allowed to pass through a two-staged filter (15 μm and 15 μm). This solution was then injected from tube-in-orifice nozzles heated to 45°C, concurrently with an aqueous solution of 35 mass % of DMAc as a hollow portion-forming material which had been previously degassed. The strand of the injected solutions was allowed to pass through an air gap section with a length of 600 mm, sealed from an external atmosphere by a spinning tube, and was then coagulated in water of 50°C. The width of the nozzle slits of the tube-in-orifice nozzles was 60 μm on average, maximum 61 μm and minimum 59 μm. The ratio of the maximum value to the minimum value of the slit width was 1.03, and the draft ratio was 1.01. The hollow fiber membranes where removed from the coagulation bath, and were allowed to pass

through a water bath of 85°C for 45 seconds to thereby remove the solvent and an excess of the hydrophilic polymer, and then were wound up. A bundle of about 10,000 hollow fiber membranes thus obtained was immersed in pure water, and was washed in an autoclave at 121°C for one hour. Then, the same bundle was wrapped in a polyethylene film which was the same one as used in Example 1, and was dried in the same manner as in Example 1. The rollers for changing the fiber path during the spinning step were planished at their surfaces, and the stationary guides were mat-finished at their surfaces. The resultant hollow fiber membranes had an inner diameter of 201.5 μm, a thickness of 44.4 μm and a moisture content of 2.3 mass %. The mass ratio of the hydrophilic polymer to the hydrophobic polymer was 4.2 mass %.

As is apparent from Table 1, the UV absorbance (220 to 350 nm) of the bundle of hollow fiber membranes showed low levels at all the sampling sites, and thus were stable. As a result of the leak tests, there was observed no failure in adhesion due to the sticking of the hollow fiber membranes to one another.

A blood purifier was fabricated, using the obtained hollow fiber membranes. The blood purifier was filled with RO water, and then was irradiated with γ-rays at an absorbed dose of 25 kGy for a crosslinking treatment. After the irradiation with γ-rays, the hollow fiber membranes were cut out of the blood purifier, and then were subjected to an elution test. As a result, the amount of eluting PVP was 8 ppm which was a level of no problem.

Each of the blood purifiers was filled with a compressed air under a pressure of 0.1 MPa, and some of the blood purifiers which showed pressure drops of not higher than 30 mmAq for 10 seconds were used for the subsequent tests. The hollow fiber membranes were removed from the blood purifier, and the outer surfaces thereof were observed with a microscope. As a result, no defect such as a flaw or the like was observed.

Further, fresh bovine blood admixed with citric acid was allowed to pass through the blood purifier at a flow rate of 200 mL/minute and at a filtering rate of 10 mL/minute, with the result of no leakage of red blood cells.

The amount of endotoxin filtered from the outside of the hollow fiber membranes to the inner side thereof was below the limit for detection, having a level of no problem. The results of other analyses are shown in Table 2.

(Example 4)

Polysulfone (P-1700, manufactured by AMOCO) (17 mass %), poly(vinylpyrrolidone) (K-60, manufactured by BASF) (6 mass %), DMAc (73 mass %) and RO water (4 mass %) were dissolved at 50°C. Then, a vacuum pump was used to decompress the interior of a system to -400 mmHg, and the system was immediately sealed so as not to change the composition of the membrane-forming solution due to the evaporation of the solvent or the like, and the system was left to stand for 30 minutes. This operation was repeated three times to degas the membrane-forming solution. The same solution was allowed to pass through a two-staged filter (15 μm and 15 μm), and was then injected from tube-in-orifice nozzles heated to 50°C, concurrently with an aqueous solution of 35 mass % of DMAc as a hollow portion-forming material which had been previously degassed under a reduced pressure. The strand of the injected solutions was allowed to pass through an air gap section with a length of 500 mm, sealed from an external atmosphere by a spinning tube, and was then coagulated in water of 50°C. The width of the nozzle slits of the tube-in-orifice nozzles was 60 μm on average, maximum 61 μm and minimum 59 μm. The ratio of the maximum value to the minimum value of the slit width was 1.03, and the draft ratio was 1.01. The hollow fiber membranes removed from the coagulation bath were allowed to pass through a water bath of 85°C for 45 seconds to thereby remove the solvent and an excess of the hydrophilic polymer, and then were wound up. A bundle of about 10,000 hollow fiber membranes thus obtained was immersed in pure water, and was washed in an autoclave at 121°C for one hour. Then, the same bundle was wrapped in a polyethylene film and was dried in the same manner as in Example 2. The rollers for changing the fiber path during the spinning step were planished at their surfaces, and the stationary guides were mat-finished at their surfaces. The resultant hollow fiber membranes had an inner diameter of 201.2 μm, a thickness of 43.8 μm and a moisture content of 1.7 mass %. The mass ratio of the hydrophilic polymer to the hydrophobic polymer was 3.8 mass %.

As is apparent from Table 1, the UV absorbance (220 to 350 nm) of the bundle of hollow fiber membranes showed low levels at all the sampling sites, and thus were stable. As a result of the leak tests, there was observed no failure in adhesion due to the sticking of the hollow fiber membranes to one another.

A blood purifier was fabricated, using the obtained hollow fiber membranes. The blood purifier was filled with RO water, and then was irradiated with γ-rays at an absorbed dose of 25 kGy for a crosslinking treatment. After the irradiation with γ-rays, the hollow fiber membranes were cut out of the blood purifier, and then were subjected to an elution test. As a result, the amount of eluting PVP was 8 ppm which was a level of no problem.

Each of the blood purifiers was filled with a compressed air under a pressure of 0.1 MPa, and some of the blood purifiers which showed pressure drops of not higher than 30 mmAq for 10 seconds were used for the subsequent tests. The hollow fiber membranes were removed from the blood purifier, and the outer surfaces thereof were observed with a microscope. As a result, no defect such as a flaw or the like was observed.

Further, fresh bovine blood admixed with citric acid was allowed to pass through the blood purifier at a flow rate of 200 mL/minute and at a filtering rate of 10 mL/minute, with the result of no leakage of red blood cells.

The amount of endotoxin filtered from the outside of the hollow fiber membranes to the inner side thereof was below the limit for detection, having a level of no problem. The results of other analyses are shown in Table 2.

(Comparative Example 5)

Polyethersulfone (SUMIKAEXCEL® 4800P, manufacture by Sumika Chemtex Co., Ltd.) (20 mass %), triethylene glycol (MITSUI CHEMICALS, INC.) (40 mass %) and N-methyl-2-pyrolidone (manufactured by MITSUBISHI CHEMICAL COMPANY) (40 mass %) were mixed and stirred to prepare a homogeneous and transparent membrane-forming solution. Hollow fiber membranes were obtained in the same manners as in Example 2, except that this membrane-forming solution and a solution of N-methyl-2-pyrolidone, triethyleneglycol and water (5/5/90) as a hollow portion-forming material were used. The inner diameter of the resultant hollow fiber membranes was 195 μm, and the thickness thereof, 51.5 μm. The moisture content thereof was 0.4 mass %, and the mass ratio of the hydrophilic polymer to the hydrophobic polymer was 0 mass %.

The hollow fiber membranes had no problem in UV absorbance, fluctuation in UV absorbance, sticking thereof, reverse flow of endotoxin, etc. However, it was impossible to use them for hemodialysis. It was considered that the hollow fiber membranes had high hydrophobicity, because of containing no hydrophilic polymer, and that proteins in the blood clogged the pores of the membranes and accumulated thereon.

[Table 1]

| Measuring sites | UV (220 to 350 nm) [Absorbance] | | | | | | | | |
|---|---|---|---|---|---|---|---|---|---|
| | Ex.1 | Ex.2 | Ex.3 | Ex.4 | C.Ex. 1 | C.Ex. 2 | C.Ex. 3 | C.Ex. 4 | C.Ex. 5 |
| 1 | 0.04 | 0.03 | 0.04 | 0.04 | 0.10 | 0.34 | 0.22 | 0.13 | 0.003 |
| 2 | 0.05 | 0.05 | 0.04 | 0.03 | 0.08 | 0.31 | 0.25 | 0.05 | 0.002 |
| 3 | 0.04 | 0.04 | 0.04 | 0.04 | 0.08 | 0.30 | 0.21 | 0.07 | 0.003 |
| 4 | 0.06 | 0.06 | 0.06 | 0.05 | 0.06 | 0.26 | 0.20 | 0.10 | 0.003 |
| 5 | 0.04 | 0.05 | 0.03 | 0.09 | 0.06 | 0.28 | 0.21 | 0.12 | 0.003 |
| 6 | 0.04 | 0.04 | 0.04 | 0.05 | 0.05 | 0.21 | 0.21 | 0.07 | 0.002 |
| 7 | 0.05 | 0.06. | 0.05 | 0.04 | 0.04 | 0.23 | 0.24 | 0.10 | 0.001 |
| 8 | 0.06 | 0.04 | 0.05 | 0.06 | 0.05 | 0.17 | 0.22 | 0.13 | 0.002 |
| 9 | 0.04 | 0.05 | 0.04 | 0.03 | 0.03 | 0.16 | 0.21 | 0.07 | 0.003 |
| 10 | 0.04 | 0.04 | 0.05 | 0.04 | 0.03 | 0.15 | 0.25 | 0.13 | 0.003 |
| Max. | 0.06 | 0.06 | 0.06 | 0.06 | 0.10 | 0.34 | 0.25 | 0.13 | 0.003 |
| Difference | 0.02 | 0.03 | 0.03 | 0.03 | 0.07 | 0.19 | 0.05 | 0.08 | 0.002 |

[Table 2] (Part 1)

| | Ex. 1 | Ex. 2 | Ex. 3 | Ex. 4 |
|---|---|---|---|---|
| Water permeability (ml/m$^2$/hr/mmHg) | 498 | 383 | 666 | 312 |
| Burst Pressure (MPa) | 0.6 | 0.6 | 0.7 | 0.6 |
| Thickness deviation (Ratio) | 0.83 | 0.92 | 0.83 | 0.90 |
| Leakage of blood (number) | 0 | 0 | 0 | 0 |
| PVP eluting amount (ppm) | 4 | 5 | 8 | 8 |
| PVP content in outer surface (mass %) | 30 | 26 | 30 | 35 |
| Av. pore area of outer surface (μm$^2$) | 0.5 | 0.6 | 0.7 | 0.7 |
| Porosity of outer surface (%) | 18 | 19 | 12 | 25 |
| Moisture content | 2.4 | 1.6 | 2.3 | 1.7 |

(continued)

| | Ex. 1 | Ex. 2 | Ex. 3 | Ex. 4 |
|---|---|---|---|---|
| PVP/PSf (mass %) | 3.1 | 3.3 | 4.2 | 3.8 |
| Number of membranes partially stuck | 0 | 0 | 0 | 0 |
| Permeation of endotoxin | ND | ND | ND | ND |
| Insoluble component | Present | Absent | Present | Present |

[Table 2] (Part 2)

| | C.Ex. 1 | C.Ex. 2 | C.Ex. 3 | C.Ex. 4 | C.Ex. 5 |
|---|---|---|---|---|---|
| Water permeability ($ml/m^2/hr/mmHg$) | 556 | 530 | - | 325 | 1,210 |
| Burst Pressure (MPa) | 0.6 | 0.6 | - | 0.3 | 0.7 |
| Thickness deviation (Ratio) | 0.83 | 0.68 | - | 0.47 | 0.88 |
| Leakage of blood (number) | 0 | 0 | - | 2 | 0 |
| PVP eluting amount (ppm) | 11 | 21 | - | 17 | - |
| PVP content in outer surface (mass %) | 38 | 29 | 19 | 57 | 0 |
| Av. pore area of outer surface ($\mu m^2$) | 0.7 | 0.5 | 0.2 | 1.2 | 0.1 |
| Porosity of outer surface (%) | 20 | 23 | 7 | 36 | 9 |
| Moisture content (%) | 2.5 | 2.4 | 1.9 | 0.7 | 0.5 |
| PVP/PSf (mass %) | 3.0 | 3.3 | 4.6 | 3.5 | - |
| Number of membranes partially stuck | 13 | 21 | (30) | 16 | 0 |
| Permeation of endotoxin | ND | ND | - | X | ND |
| Insoluble component | Present | Present | - | Present | Absent |

INDUSTRIAL APPLICABILITY

The polysulfone-based hollow fiber membranes of the present invention are highly safe and stable in performance and are excellent in module-fabricating workability, and thus are suitable for use in hollow fiber type blood purifiers which have high water permeable performance, according to the internal filtration-acceleration type hemodialysis, for the treatments of chronic renal failures. These hollow fiber membranes can be economically and reliably manufactured by any of the manufacturing processes of the present invention. Therefore, the present invention will significantly contribute to this industrial field.

## Claims

**1.** A bundle of a plurality of selectively permeable polysulfone-based hollow fiber membranes comprising poly(vinylpyrrolidone),
wherein the amount of poly(vinylpyrrolidone) eluting from each hollow fiber membrane is not larger than 10 ppm, wherein the amount is obtained by adding 100 ml of pure water to 1 g of the hollow fiber membranes, making an extraction from the wet hollow fiber membranes at 70°C for one hour, mixing 2.5 ml of the extracted solution with 1.25 ml of a 0.2 mol aqueous citric acid solution and 0.5 ml of a 0.006 N aqueous iodine solution,
and leaving the mixture to stand at room temperature for 10 minutes, after that the absorbance of the mixture at 470 nm is measured,
wherein the mass ratio of the poly(vinylpyrrolidone) to the polysulfone-based resin is 1 to 20 mass %, and
wherein the content of the poly(vinylpyrrolidone) in the outer surface of the hollow fiber membrane is 25 to 50 mass %,
**characterized in that** any of extracted solutions from ten fractions of said bundle, obtained by dividing said bundle at substantially regular intervals along the lengthwise direction, shows a maximum value of smaller than 0.10 in UV

absorbance at a wavelength of 220 to 350 nm, with the proviso that said extracted solutions are obtained by adding 100 ml of pure water to 1 g of each of the fractions of the hollow fiber membranes and making an extraction from the wet hollow fiber membranes at 70°C for one hour in accordance with the extraction method for tests regulated in the approval manufacturing standards for dialytic artificial kidney devices; and **in that** the difference between the maximum and the minimum out of the maximum values of UV absorbance of the extracted solutions from the respective fractions is not larger than 0.05.

2. The bundle according to claim 1, which has substantially no partial sticking of the hollow fiber membranes in the lengthwise direction, wherein partial sticking is determined by using a SK cutter to cut a bundle of dried hollow fiber membranes, wrapped in a film, at 2 cm intervals along the lengthwise direction, so as not to fuse the hollow fiber membranes to one another due to heat which is generated in association with the cutting of the bundle of the dried hollow fiber membranes, and slowly dropping the sliced bundle of the hollow fiber membranes onto paper on a table, while being destaticized, so as to visually observe the presence or absence of a mass of a plurality of the hollow fiber membranes.

3. The bundle according to claim 1 or 2, wherein the porosity of the outer surface of the hollow fiber membrane is 8 to 25%.

4. The bundle according to any one of claims 1 to 3, wherein the poly(vinylpyrrolidone) is crosslinked so as to be insoluble in water.

5. The bundle according to any one of claims 1 to 4, which is used in a blood purifier.

6. A process for manufacturing a bundle of selectively permeable polysulfone-based hollow fiber membranes as described in claim 1, **characterized in that** a bundle of hollow fiber membranes is dried by feeding an air with an air capacity of 0.01 to 5 L/sec per one hollow fiber membrane and a drying temperature of 20 to 80°C and inverting the direction of feeding the air to dry the bundle of hollow fiber membranes 180 degree alternately at given time intervals.

7. The process according to claim 6, wherein, when the moisture content of the bundle of hollow fiber membranes is 200 to 1,000 mass %, the drying temperature is 60 to 80°C, and, when the moisture content of the bundle of hollow fiber membranes is 1 to 50 mass %, the drying temperature is from room temperature to 60°C,
wherein the moisture content (mass %) of a bundle of hollow fiber membranes is calculated from the mass (a) of the bundle found before the drying and the mass (b) of the same bundle found after the drying, by the following equation:

$$\text{moisture content (mass \%)} = (a - b) \times 100 / b.$$

8. The process according to claim 6, wherein, in drying the bundle of hollow fiber membranes by feeding an air to said bundle, the air capacity and the drying temperature are decreased in accordance with a decrease in the moisture content of said bundle.

9. The process according to claim 6, **characterized in that** the bundle of hollow fiber membranes is dried by combined drying steps comprising a step of drying the bundle by irradiation with microwaves under a reduced pressure, and a step of drying the bundle by feeding an air to said bundle while inverting the air-feeding direction alternately at given time intervals.

10. The process according to claim 9, wherein the bundle of hollow fiber membranes is dried under a reduced pressure of 0.1 to 20 kPa.

11. The process according to claim 9 or 10, wherein the bundle of hollow fiber membranes is dried by irradiation with microwaves having a low output of 0.1 to 20 kW.

12. The process according to any one of claims 9 to 11, wherein the bundle of hollow fiber membranes is dried while the output of microwaves is being decreased in accordance with a decrease in the moisture content of the bundle of hollow fiber membranes.

13. The process according to any one of claims 9 to 12, wherein the bundle of hollow fiber membranes is dried while

the output of microwaves is being sequentially decreased in three steps in accordance with a decrease in the moisture content of the bundle of hollow fiber membranes.

**14.** The process according to any one of claims 9 to 13, wherein the bundle of hollow fiber membranes is dried at a temperature of 30 to 80°C.

**15.** A blood purifier comprising a bundle of a plurality of selectively permeable polysulfone-based hollow fiber membranes according to any one of claims 1 to 5.

**Patentansprüche**

**1.** Ein Bündel aus einer Vielzahl von selektiv permeablen Hohlfasermembranen auf Polysulfon-Basis, umfassend Poly(vinylpyrrolidon),
wobei die Menge von Poly(vinylpyrrolidon), die aus jeder Hohlfasermembran eluiert, nicht größer als 10 ppm ist, wobei die Menge durch Zugeben von 100 ml reinem Wasser zu 1 g der Hohlfasermembranen, Durchführen einer Extraktion aus den nassen Hohlfasermembranen bei 70°C für eine Stunde, Mischen von 2,5 ml der extrahierten Lösung mit 1,25 ml einer 0,2 Mol wässrigen Zitronensäurelösung und 0,5 ml einer 0,006 N wässrigen Iodlösung und Stehenlassen des Gemischs bei Raumtemperatur für 10 Minuten, anschließend Messen der Extinktion des Gemischs bei 470 nm, erhalten wird,
wobei das Massenverhältnis des Poly(vinylpyrrolidons) zum Harz auf Polysulfon-Basis 1 bis 20 Massen% beträgt und wobei der Gehalt des Poly(vinylpyrrolidons) in der äußeren Oberfläche der Hohlfasermembran 25 bis 50 Massen% beträgt,
**dadurch gekennzeichnet, dass** jede der extrahierten Lösungen von zehn Fraktionen des Bündels, welche durch Teilen des Bündels in im Wesentlichen gleichmäßige Abstände entlang der Längsrichtung erhalten werden, einen Maximalwert von kleiner als 0,10 der UV-Extinktion bei einer Wellenlänge von 220 bis 350 nm aufweist, mit der Maßgabe, dass die extrahierten Lösungen durch Zugeben von 100 ml reinen Wassers zu jeweils 1 g der Fraktionen der Hohlfasermembranen und Durchführen einer Extraktion aus den nassen Hohlfasermembranen bei 70°C für eine Stunde, gemäß dem Extraktionsverfahren für Tests, die in der Zulassungsnorm für die Herstellung von Dialysevorrichtungen für künstliche Nieren geregelt sind, erhalten werden; und dadurch, dass die Differenz zwischen dem Maximum und dem Minimum von den Maximalwerten der UV-Extinktion der extrahierten Lösungen von den jeweiligen Fraktionen nicht größer als 0,05 ist.

**2.** Das Bündel nach Anspruch 1, das im Wesentlichen kein teilweises Verkleben der Hohlfasermembranen in Längsrichtung aufweist, wobei teilweises Verkleben bestimmt wird, indem ein SK-Cutter verwendet wird, um ein Bündel aus getrockneten Hohlfasermembranen, eingewickelt in einer Folie, in Abständen von 2 cm entlang der Längsrichtung zu schneiden, um nicht die Hohlfasermembranen aufgrund der Hitze, die im Zusammenhang mit dem Schneiden des Bündels aus getrockneten Hohlfasermembranen erzeugt wird, miteinander zu verschmelzen, und das geschnittene Bündel aus Hohlfasermembranen auf Papier auf einem Tisch langsam fallengelassen wird, während es statisch entladen wird, um so die Anwesenheit oder Abwesenheit einer Masse aus einer Vielzahl der Hohlfasermembranen visuell zu beobachten.

**3.** Das Bündel nach Anspruch 1 oder 2, wobei die Porosität der äußeren Oberfläche der Hohlfasermembran 8 bis 25% beträgt.

**4.** Das Bündel nach einem der Ansprüche 1 bis 3, wobei das Poly(vinylpyrrolidon) vernetzt ist, so dass es in Wasser unlöslich ist.

**5.** Das Bündel nach einem der Ansprüche 1 bis 4, das in einem Blutreiniger verwendet wird.

**6.** Ein Verfahren zur Herstellung eines Bündels aus selektiv permeablen Hohlfasermembranen auf Polysulfon-Basis wie in Anspruch 1 beschrieben, **dadurch gekennzeichnet, dass** ein Bündel aus Hohlfasermembranen durch Zuführen von Luft mit einer Luftkapazität von 0,01 bis 5 1/Sek. pro Hohlfasermembran und einer Trocknungstemperatur von 20 bis 80°C und Umkehren der Richtung der Luftzuführung getrocknet wird, um das Bündel aus Hohlfasermembranen 180 Grad wechselweise zu gegebenen Zeitintervallen zu trocknen.

**7.** Das Verfahren nach Anspruch 6, wobei, wenn der Feuchtigkeitsgehalt des Bündels aus Hohlfasermembranen 200 bis 1.000 Massen% beträgt, die Trocknungstemperatur 60 bis 80°C beträgt und, wenn der Feuchtigkeitsgehalt des

Bündels aus Hohlfasermembranen 1 bis 50 Massen% beträgt, die Trocknungstemperatur von Zimmertemperatur bis 60°C beträgt,
wobei der Feuchtigkeitsgehalt (Massen%) eines Bündels aus Hohlfasermembranen aus der Masse (a) des Bündels, die vor dem Trocknen festgestellt wurde, und der Masse (b) des gleichen Bündels, die nach dem Trocknen festgestellt wurde, durch die folgende Gleichung berechnet wird:

$$\text{Feuchtigkeitsgehalt (Massen\%)} = (a - b) \times 100 / b.$$

8. Das Verfahren nach Anspruch 6, wobei beim Trocknen des Bündels aus Hohlfasermembranen durch Zuführen von Luft zu dem Bündel die Luftkapazität und die Trocknungstemperatur einer Abnahme des Feuchtigkeitsgehalts des Bündels entsprechend reduziert werden.

9. Das Verfahren nach Anspruch 6, **dadurch gekennzeichnet, dass** das Bündel aus Hohlfasermembranen durch kombinierte Trocknungsschritte, umfassend einen Schritt des Trocknens des Bündels durch Bestrahlung mit Mikrowellen unter reduziertem Druck und einen Schritt des Trocknens des Bündels durch Zuführen von Luft zum Bündel, indem die Richtung der Luftzufuhr wechselweise zu gegebenen Zeitintervallen umgekehrt wird, getrocknet wird.

10. Das Verfahren nach Anspruch 9, wobei das Bündel aus Hohlfasermembranen unter einem reduzierten Druck von 0,1 bis 20 kPa getrocknet wird.

11. Das Verfahren nach Anspruch 9 oder 10, wobei das Bündel aus Hohlfasermembranen durch Bestrahlung mit Mikrowellen mit einer geringen Leistung von 0,1 bis 20 kW getrocknet wird.

12. Das Verfahren nach einem der Ansprüche 9 bis 11, wobei das Bündel aus Hohlfasermembranen getrocknet wird, indem die Leistung der Mikrowellen einer Abnahme des Feuchtigkeitsgehalts des Bündels aus Hohlfasermembranen entsprechend reduziert wird.

13. Das Verfahren nach einem der Ansprüche 9 bis 12, wobei das Bündel aus Hohlfasermembranen getrocknet wird, indem die Leistung der Mikrowellen sequenziell
in drei Schritten einer Abnahme des Feuchtigkeitsgehalts des Bündels aus Hohlfasermembranen entsprechend reduziert wird.

14. Das Verfahren nach einem der Ansprüche 9 bis 13, wobei das Bündel aus Hohlfasermembranen bei einer Temperatur von 30 bis 80°C getrocknet wird.

15. Ein Blutreiniger, umfassend ein Bündel aus einer Vielzahl von selektiv permeablen Hohlfasermembranen auf Polysulfon-Basis nach einem der Ansprüche 1 bis 5.

## Revendications

1. Faisceau d'une pluralité de membranes à fibres creuses à base de polysulfone sélectivement perméables comprenant de la poly(vinylpyrrolidone)
dans lequel la quantité de poly(vinylpyrrolidone) éluée de chaque membrane à fibres creuses n'est pas supérieure à 10 ppm, la quantité étant obtenue par ajout de 100 ml d'eau pure à 1 g de membranes à fibres creuses, conduite d'une extraction des membranes à fibres creuses humides à 70 °C pendant une heure, mélange de 2,5 ml de la solution extraite avec 1,25 ml d'une solution aqueuse d'acide citrique 0,2 mol et 0,5 ml d'une solution aqueuse d'iode 0,006 N, et en laissant le mélange à température ambiante pendant 10 minutes, après quoi l'absorbance du mélange à 470 nm est mesurée,
dans lequel le rapport en masse de la poly(vinylpyrrolidone) à la résine à base de polysulfone est de 1 à 20 % en masse, et
dans lequel la teneur en poly(vinylpyrrolidone) dans la surface externe de la membrane à fibres creuses est de 25 à 50 % en masse,
**caractérisé en ce que** l'une quelconque des solutions extraites de dix fractions dudit faisceau, obtenues par division dudit faisceau à des intervalles sensiblement réguliers le long de la direction longitudinale, présente une valeur

maximale inférieure à 0,10 d'absorbance UV à une longueur d'onde de 220 à 350 nm, à condition que lesdites solutions extraites soient obtenues par ajout de 100 ml d'eau pure à 1 g de chacune des fractions des membranes à fibres creuses et conduites d'une extraction des membranes à fibres creuses humides à 70 °C pendant une heure selon le procédé d'extraction pour des essais réglementés dans les normes de fabrication d'approbation pour des dispositifs de rein artificiel dialytique ; et **en ce que** la différence entre le maximum et le minimum
des valeurs maximales d'absorbance UV des solutions extraites des fractions respectives ne soit pas supérieur à 0,05.

2. Faisceau selon la revendication 1, qui n'a sensiblement pas d'adhérence partielle des membranes à fibres creuses dans la direction longitudinale, l'adhérence partielle étant déterminée en utilisant un dispositif de coupe SK pour découper un faisceau de membranes à fibres creuses séchées, enveloppée dans un film, à des intervalles de 2 cm le long de la direction longitudinale, de manière à ne pas fusionner les membranes à fibres creuses les unes aux autres sous l'effet de la chaleur qui est générée en association avec la coupe du faisceau des membranes à fibres creuses séchées, et en déposant lentement le faisceau découpé de membranes à fibres creuses sur du papier sur une table, tout en éliminant l'électricité statique, de manière à observer visuellement la présence ou l'absence d'une masse d'une pluralité de membranes à fibres creuses.

3. Faisceau selon la revendication 1 ou 2, dans lequel la porosité de la surface externe de la membrane à fibres creuses est de 8 à 25 %.

4. Faisceau selon l'une quelconque des revendications 1 à 3, dans lequel la poly(vinylpyrrolidone) est réticulée de manière à être insoluble dans l'eau.

5. Faisceau selon l'une quelconque des revendications 1 à 4, qui est utilisé dans un purificateur de sang.

6. Procédé de fabrication d'un faisceau de membranes à fibres creuses à base de polysulfone sélectivement perméables comme décrit dans la revendication 1, **caractérisé en ce qu'**un faisceau de membranes à fibres creuses est séché par alimentation d'un air avec une capacité d'air
de 0,01 à 5 l/s par membrane à fibres creuses et une température de séchage de 20 à 80 °C et inversion de la direction d'alimentation de l'air pour sécher le faisceau de membranes à fibres creuses à 180 degrés de façon alternée à des intervalles de temps donnés.

7. Procédé selon la revendication 6, dans lequel, lorsque la teneur en eau du faisceau de membranes à fibres creuses est de 200 à 1 000 % en masse, la température de séchage est de 60 à 80 °C, et, lorsque la teneur en eau du faisceau de membranes à fibres creuses et de 1 à 50 % en masse, la température de séchage est de la température ambiante à 60 °C,
dans lequel la teneur en eau (% en masse) d'un faisceau de membranes à fibres creuses est calculée à partir de la masse (a) du faisceau observé avant le séchage et la masse (b) du même faisceau observé après le séchage, par l'équation suivante :

$$\text{teneur en eau (\% en masse)} = (a - b) \times 100 / b.$$

8. Procédé selon la revendication 6, dans lequel, dans le séchage du faisceau de membranes à fibres creuses par alimentation d'air vers ledit faisceau, la capacité d'air et la température de séchage sont diminuées en fonction d'une diminution de la teneur en humidité dudit faisceau.

9. Procédé selon la revendication 6, **caractérisé en ce que** le faisceau de membranes à fibres creuses est séché par combinaison d'étapes de séchage comprenant une étape de séchage du faisceau par irradiation avec des micro-ondes sous une pression réduite, et une étape de séchage du faisceau par alimentation d'air vers ledit faisceau en inversant la direction d'alimentation d'air de façon alternée à des intervalles de temps donné.

10. Procédé selon la revendication 9, dans lequel le faisceau de membranes à fibres creuses est séché sous une pression réduite de 0,1 à 20 kPa.

11. Procédé selon la revendication 9 ou 10, dans lequel le faisceau de membranes à fibres creuses est séché par irradiation avec des micro-ondes ayant une sortie faible de 0,1 à 20 kW.

**12.** Procédé selon l'une quelconque des revendications 9 à 11, dans lequel le faisceau de membranes à fibres creuses est séché tandis que la sortie de micro-ondes est diminuée en fonction d'une diminution de la teneur en humidité du faisceau de membranes à fibres creuses.

**13.** Procédé selon l'une quelconque des revendications 9 à 12, dans lequel le faisceau de membranes à fibres creuses est séché tandis que la sortie de micro-ondes est séquentiellement diminuée en trois étapes en fonction d'une diminution de la teneur en humidité du faisceau de membranes à fibres creuses.

**14.** Procédé selon l'une quelconque des revendications 9 à 13, dans lequel le faisceau de membranes à fibres creuses est séché à une température de 30 à 80 °C.

**15.** Purificateur de sang comprenant un faisceau d'une pluralité de membranes à fibres creuses à base de polysulfone sélectivement perméables selon l'une quelconque des revendications 1 à 5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 61232860 A
- JP 58114702 A
- JP 5054373 B
- JP 6075667 B
- JP 2000300663 A
- JP 11309355 A
- JP 10244000 A
- JP 10230148 A
- JP 2001170171 A
- JP 2000254222 A
- JP 2001190934 A
- JP 3193262 B
- JP 2001038170 A
- JP 2000140589 A
- JP 3551971 B
- JP 2003175320 A
- JP 2003175321 A
- JP 2003175322 A
- JP 6010208 A
- EP 0997182 A1
- JP 2003245529 A
- JP 2001259380 A
- JP 2003284931 A
- JP 2000340356 A